# EUROPEAN PATENT SPECIFICATION

(11) **EP 2 657 263 B1**
(45) Date of publication and mention of the grant of the patent: **30.09.2015**
(21) Application number: 11850014.9
(22) Date of filing: 29.11.2011
(51) Int. Cl.: C08F 290/00, B01F 7/16, C08F 2/44, C08J 7/04, C09D 4/06, C09D 7/14, C09D 133/00, C09D 201/02, B01F 13/00, C09D 133/06, C09D 133/14, C09D 163/10

(54) **PROCESS FOR PRODUCTION OF DISPERSION, DISPERSION, COATING MATERIAL, COATING FILM, AND FILM**
VERFAHREN ZUR HERSTELLUNG VON DISPERSIONEN, DISPERSION, BESCHICHTUNGSMATERIAL, BESCHICHTUNGSFILM UND FILM
PROCÉDÉ DE FABRICATION D'UNE DISPERSION, DISPERSION, MATIÈRE DE REVÊTEMENT, FILM DE REVÊTEMENT ET FILM

(30) Priority: 22.12.2010 JP 2010286418
(43) Date of publication of application: 30.10.2013
(73) Proprietor: DIC Corporation, Tokyo 174-8520 (JP)
(72) Inventor: SUGIYAMA Masashi, Ichihara-shi Chiba 290-8585 (JP); WATANABE Yasuyuki, Sakura-shi Chiba 285-8668 (JP); TANIMOTO Youichi, Kitaadachi-gun Saitama 362-8577 (JP); WATANABE Hideki, Ichihara-shi Chiba 290-8585 (JP); OTO Seiichi, Tatebayashi-shi Gunma 374-0001 (JP); MINAKUCHI Ryo, Sakura-shi Chiba 2858668 (JP); OBUCHI Hiroyuki, Tokyo 174-8520 (JP)
(74) Representative: Beckmann, Claus
(86) International application number: PCT/JP2011/077517
(87) International publication number: WO 2012/086373

(56) References cited:
- JP-A- 2007 289 943
- JP-A- 2009 242 647
- JP-A- 2011 026 561
- JP-A- 2011 157 435
- JP-A- 2011 201 938

## Description

### Technical Field

The present invention relates to a production method for safely and stably producing a dispersion in which inorganic fine particles are dispersed in active-energy-ray-curable compounds; a dispersion produced by the production method; a coating material containing the dispersion; a coating film formed of the coating material; and a film including the coating-film layer.

### Background Art

Inorganic-fine-particle-dispersed active-energy-ray-curable resin compositions obtained by dispersing inorganic fine particles in resin compositions are attracting attention as novel materials that allow various properties such as, in coating films, an increase in the hardness, adjustment of refractive index, and exhibition of electrical conductivity. In contrast to these advantages, coating films formed from inorganic-fine-particle-dispersed resin compositions are inferior in transparency to coating films formed from organic-single-component resin compositions. To obtain resin compositions that provide coating films satisfying conditions in terms of hardness and transparency, inorganic fine particles having been pulverized so as to have a smaller particle size need to be dispersed in a resin with more stability.

In general, a process of pulverizing inorganic fine particles so as to have a smaller particle size and stably dispersing the inorganic fine particles in a resin may be dispersion using a wet ball mill. However, in this process, a high shear is applied to sliding portions of the mill. Accordingly, when a resin component having a polymerizable group such as an acryloyl group is used as a dispersion medium, it may polymerize to cause thickening or gelation.

Thus, there is a known method for producing an inorganic-fine-particle-dispersed resin composition in which silica sol is later added to active-energy-ray-curable monomer and oligomer (refer to Patent Literature 1). However, this method has the following problems: for example, since compatibility between the resin component and the inorganic fine particles is not sufficient, coating films do not satisfy requirements in terms of properties such as hardness and transparency and coating films suffer from phase separation, often resulting in blushing; the resin composition does not have sufficient storage stability and agglomerate is generated therein. In addition, since an inorganic-fine-particle-dispersed resin composition obtained by the method has a low nonvolatile content, it sometimes needs to be subjected to a concentration step. However, concentration of a dispersion is difficult to perform with stability because of high probability of agglomeration of silica fine particles, and the operation thereof is also complex.

Another known method is that alumina fine particles having an average primary particle size of 15 nm are dispersed in an acrylic copolymer having a weight-average molecular weight [Mw] of 40,000, an acryloyl equivalent of 214 g/eq, and a hydroxyl value of 262 mgKOH/g with a paint shaker that employs zirconia beads having a particle size of 0.3 mm and serving as a medium; and dipentaerythritol hexaacrylate is subsequently added to the obtained dispersion (refer to Patent Literature 2). However, such a method employing a paint shaker has the following problems: for example, pulverization of alumina fine particles and dispersion of alumina fine particles in the resin are not sufficiently achieved; and, since compatibility between the alumina fine particles and dipentaerythritol hexaacrylate added after the dispersion is not sufficient, coating films do not satisfy requirements in terms of properties such as hardness and coating films suffer from phase separation, often resulting in blushing.

### Citation List

### Patent Literature

PTL 1: Japanese Unexamined Patent Application Publication No. 2009-242647
PTL 2: Japanese Unexamined Patent Application Publication No. 2007-289943

### Summary of Invention

### Technical Problem

An object of the present invention is to provide a method for producing a dispersion in which pulverization and dispersion of inorganic fine particles can be stably performed with high productivity while thickening and gelation are suppressed; a dispersion that provides a cured coating film having high hardness and high transparency; a coating material including the dispersion; a coating film; and a film provided by forming the coating film. Solution to Problem

The inventors of the present invention performed thorough studies on how to achieve the object. As a result, the inventors have found the following findings and the like. By using a wet ball mill including
a vessel (p) filled with a medium,
a rotational shaft (q),
a stirring impeller (r) that has a rotational axis coaxial with the rotational shaft (q) and that is rotated by rotation of the rotational shaft,
a slurry supply port (s) provided in the vessel (p),
a slurry discharge port (t) provided in the vessel (p), and
a shaft seal device (u) disposed in a portion where the rotational shaft penetrates the vessel, the shaft seal device (u) including two mechanical seal units in which seal portions of the two mechanical seal units are sealed with an external sealing liquid, even when a polyfunctional acrylate monomer or oligomer is used as a dispersion medium, thickening or gelation due to polymerization of acryloyl groups is not caused and pulverization of inorganic fine particles and stable dispersion of inorganic fine particles in a resin can be achieved. As a result, an inorganic-fine-particle-dispersed resin composition can be simply and efficiently produced that has excellent stability over time and a high nonvolatile content and that provides a cured coating film having high hardness and high transparency. Thus, the present invention has been accomplished.

Specifically, the present invention relates to a method for producing a dispersion, the method including,
in a wet ball mill including
a vessel (p) filled with a medium,
a rotational shaft (q),
a stirring impeller (r) that has a rotational axis coaxial with the rotational shaft (q) and that is rotated by rotation of the rotational shaft,
a slurry supply port (s) provided in the vessel (p),
a slurry discharge port (t) provided in the vessel (p), and
a shaft seal device (u) disposed in a portion where the rotational shaft penetrates the vessel, the shaft seal device (u) including two mechanical seal units in which seal portions of the two mechanical seal units are sealed with an external sealing liquid,
supplying a slurry through the supply port (s) into the vessel (p), the slurry containing as essential components an active-energy-ray-curable compound (A), an active-energy-ray-curable compound (B), and inorganic fine particles (C), the active-energy-ray-curable compound (A) having a weight-average molecular weight (Mw) in a range of 3, 000 to 100,000, having a (meth)acryloyl group in a molecular structure, and having a (meth)acryloyl equivalent in a range of 100 g/eq to 600 g/eq, the active-energy-ray-curable compound (B) having 3 to 6 (meth)acryloyl groups in a molecular structure and having a molecular weight in a range of 100 to 600; rotating the rotational shaft (q) and the stirring impeller (r) in the vessel (p) to stir the medium and the slurry so that the inorganic fine particles (C) in the slurry are pulverized and the inorganic fine particles (C) are dispersed in the active-energy-ray-curable compound (A) and the active-energy-ray-curable compound (B); and subsequently discharging the slurry through the discharge port.

The present invention also relates to a dispersion produced by the production method.

The present invention also relates to a coating material containing the dispersion.

The present invention also relates to a coating film formed by curing the coating material.

The present invention also relates to a film including a layer including the coating film.

### Advantageous Effects of Invention

The present invention can provide a method for producing a dispersion in which pulverization and dispersion of inorganic fine particles can be stably performed with high productivity while thickening and gelation are suppressed; a dispersion that provides a cured coating film having high hardness and high transparency; a coating material including the dispersion; a coating film; and a film provided by forming the coating film.

### Brief Description of Drawings

[Fig. 1] Fig. 1 is a longitudinal sectional view of a wet ball mill Y used in a method for producing a dispersion according to the present invention.
[Fig. 2] Fig. 2 is a longitudinal sectional view of a shaft seal device of a wet ball mill Y used in a method for producing a dispersion according to the present invention.
[Fig. 3] Fig. 3 is a schematic view of a circulation-type dispersion cycle for a raw-material slurry, the circulation-type dispersion cycle including a wet ball mill Y used in a method for producing a dispersion according to the present invention.
[Fig. 4] Fig. 4 is a longitudinal sectional view of a wet ball mill Z used in a method for producing a dispersion according to the present invention.
[Fig. 5] Fig. 5 is a longitudinal sectional view of a shaft seal device of a wet ball mill Z used in a method for producing a dispersion according to the present invention.
[Fig. 6] Fig. 6 is a schematic view of a circulation-type dispersion cycle for a raw-material slurry, the circulation-type dispersion cycle including a wet ball mill Z used in a method for producing a dispersion according to the present invention.
[Fig. 7] Fig. 7 is a longitudinal sectional view of a wet ball mill X used in COMPARATIVE EXAMPLES.
[Fig. 8] Fig. 8 is a longitudinal sectional view of a shaft seal device of a wet ball mill X used in COMPARATIVE

### EXAMPLES.

### Description of Embodiments

An active-energy-ray-curable compound (A) used in the present invention serves as a dispersion medium for inorganic fine particles (C) and has a relatively high molecular weight and is polyfunctional. Accordingly, curling of the resultant coating films is suppressed and coating films having high hardness and high curling resistance can be obtained.

The active-energy-ray-curable compound (A) used in the present invention has a weight-average molecular weight (Mw) in the range of 3,000 to 100,000. When the weight-average molecular weight (Mw) is less than 3,000, the resultant coating films suffer from large curing shrinkage and have low curling resistance. When the weight-average molecular weight (Mw) is more than 100,000, the viscosity becomes excessively high and hence production of a dispersion becomes difficult. In particular, because coating films suffer from less curing shrinkage and are also excellent in leveling properties, the weight-average molecular weight (Mw) is preferably in the range of 5,000 to 80,000, more preferably in the range of 6,000 to 50,000.

Note that, in the present invention, the weight-average molecular weight (Mw) and the number-average molecular weight (Mn) are values measured with a gel permeation chromatograph (GPC) under the following conditions.

Measurement apparatus: HLC-8220, manufactured by Tosoh Corporation
Columns: Guard column H_{XL}-H, manufactured by Tosoh Corporation
   + TSKgel G5000H_{XL}, manufactured by Tosoh Corporation X
   + TSKgel G4000H_{XL}, manufactured by Tosoh Corporation
   + TSKgel G3000H_{XL}, manufactured by Tosoh Corporation
   + TSKgel G2000H_{XL}, manufactured by Tosoh Corporation
Detector: RI (differential refractometer)
Data processing: SC-8010, manufactured by Tosoh Corporation
Measurement conditions: Column temperature 40°C
   Solvent tetrahydrofuran
   Flow rate 1.0 ml/min
Standard: polystyrene
Sample: 0.4% by weight tetrahydrofuran solution (100 µl) in terms of resin solid content prepared by filtration through a microfilter

The active-energy-ray-curable compound (A) has a (meth)acryloyl group in the molecular structure and has a (meth)acryloyl equivalent in the range of 100 g/eq to 600 g/eq. Here, the (meth)acryloyl group denotes the acryloyl group or the methacryloyl group. The (meth)acryl equivalent denotes the solid-content weight of the compound (A) with respect to 1 mole of the (meth)acryloyl group (g/eq). When the (meth)acryloyl equivalent of the compound (A) is less than 100 g/eq, the resultant coating films have excessively high crosslinking density and suffer from large curling caused by curing shrinkage. When the (meth)acryloyl equivalent of the compound (A) is more than 600 g/eq, the resultant coating films have low hardness. In particular, the compound (A) preferably has a (meth)acryloyl equivalent in the range of 150 g/eq to 500 g/eq, more preferably in the range of 170 g/eq to 450 g/eq because the resultant coating films are highly balanced in terms of curling resistance and hardness.

The active-energy-ray-curable compound (A) may be, for example, a poly(meth)acrylate (D) having a urethane structure, a acrylic-polymer poly(meth)acrylate (E), or an epoxy-compound poly(meth)acrylate (F).

The poly(meth)acrylate (D) having a urethane structure may be, for example, a poly(meth)acrylate (D1) having a urethane structure or a poly(meth)acrylate (D2) having a urethane structure. The poly(meth)acrylate (D1) having a urethane structure is prepared in the following manner: a reaction between a polyol compound (d1) and a polyisocyanate compound (d2) is caused under conditions that the amount of the isocyanate groups of the polyisocyanate (d2) is excess with respect to the hydroxyl groups of the polyol compound (d1); and the reaction between the resultant reaction product and a hydroxyl-group-containing (meth)acrylate compound (d3) is caused. The poly(meth)acrylate (D2) having a urethane structure is prepared by the reaction between a polyisocyanate compound (d2) and a hydroxyl-group-containing (meth)acrylate (d3).

Examples of the polyol compound (d1) serving as a starting material of the poly(meth)acrylate (D1) having a urethane structure include: aliphatic diols such as ethylene glycol, diethylene glycol, propylene glycol, 1,3-propanediol, 1,2,2-trimethyl-1,3-propanediol, 2,2-dimethyl-3-isopropyl-1,3-propanediol, 1,4-butanediol, 1,3-butanediol, 3-methyl-1,3-butanediol, 1,5-pentanediol, 3-methyl 1,5-pentanediol, neopentyl glycol, 1,6-hexanediol, and 2,2,4-trimethyl-1,3-pentanediol;
aliphatic polyols such as trimethylolethane, trimethylolpropane, glycerin, hexanetriol, and pentaerythritol;
ether diols such as polyoxyethylene glycol and polyoxypropylene glycol;
alicyclic diols such as 1,4-cyclohexanedimethanol and hydrogenated bisphenol A;
modified polyether diols or polyols prepared by ring-opening polymerization between the above-described aliphatic diols or the above-described aliphatic polyols and various cyclic ether-bond-containing compounds such as ethylene oxide, propylene oxide, tetrahydrofuran, ethyl glycidyl ether, propyl glycidyl ether, butyl glycidyl ether, phenyl glycidyl ether, and ally glycidyl ether;
lactone-based polyester diols or polyols prepared by polycondensation reaction between the above-described aliphatic diols or polyols and various lactones such as ε-caprolactone; and
polyester diols or polyols prepared by co-condensation between the above-described aliphatic diols or polyols and polycarboxylic acids: aliphatic dicarboxylic acids such as malonic acid, succinic acid, glutaric acid, adipic acid, azelaic acid, and sebacic acid; aromatic dicarboxylic acids such as phthalic acid (anhydride), terephthalic acid, isophthalic acid, and orthophthalic acid; alicyclic dicarboxylic acids such as hexahydrophthalic acid and 1,4-cyclohexanedicarboxylic acid; aliphatic unsaturated dicarboxylic acids such as tetrahydrophthalic acid, maleic acid (anhydride), fumaric acid, citraconic acid, itaconic acid, and glutaconic acid; and various tricarboxylic acids such as 1,2,5-hexanetricarboxylic acid, trimellitic acid, 1,2,5-benzenetricarboxylic acid, 1,2,4-cyclohexanetricarboxylic acid, and 2,5,7-naphthalenetricarboxylic acid. These compounds may be used alone or in combination of two or more thereof.

Examples of the polyisocyanate compound (d2) serving as a starting material of the poly(meth)acrylates (D1) and (D2) having a urethane structure include various diisocyanate monomers, adduct-type polyisocyanate compounds intramolecularly having urethane bonds, and nurate-type polyisocyanate compounds intramolecularly having isocyanurate-ring structures.

Examples of the diisocyanate monomers include: aliphatic diisocyanates such as butane-1,4-diisocyanate, hexamethylene diisocyanate, 2,2,4-trimethylhexamethylene diisocyanate, 2,4,4-trimethylhexamethylene diisocyanate, xylylene diisocyanate, and m-tetramethylxylylene diisocyanate;
alicyclic diisocyanates such as cyclohexane-1,4-diisocyanate, isophorone diisocyanate, lysine diisocyanate, dicyclohexylmethane-4,4'-diisocyanate, 1,3-bis(isocyanatomethyl)cyclohexane, and methylcyclohexane diisocyanate; and
aromatic diisocyanates such as 1,5-naphthylene diisocyanate, 4,4'-diphenylmethane diisocyanate, 4,4'-diphenyldimethylmethane diisocyanate, 4,4'-dibenzyl diisocyanate, dialkyldiphenylmethane diisocyanates, tetraalkyldiphenylmethane diisocyanates, 1,3-phenylene diisocyanate, 1,4-phenylene diisocyanate, and tolylene diisocyanate.

Such an adduct-type polyisocyanate compound intramolecularly having a urethane bond can be prepared by, for example, a reaction between a diisocyanate monomer and a polyol compound. Examples of the diisocyanate monomer used in the reaction include various diisocyanate monomers described above and these diisocyanate monomers may be used alone or in combination of two or more thereof. Examples of the polyol compound used in the reaction include various polyol compounds described as examples of the polyol compound (d1).

Such a nurate-type polyisocyanate compound intramolecularly having an isocyanurate-ring structure can be prepared by, for example, a reaction between a diisocyanate monomer and a monoalcohol and/or a diol. Examples of the diisocyanate monomer used in the reaction include various diisocyanate monomers described above and these diisocyanate monomers may be used alone or in combination of two or more thereof. Examples of the monoalcohol used in the reaction include hexanol, 2-ethylhexanol, octanol, n-decanol, n-undecanol, n-dodecanol, n-tridecanol, n-tetradecanol, n-pentadecanol, n-heptadecanol, n-octadecanol, n-nonadecanol, eicosanol, 5-ethyl-2-nonanol, trimethylnonyl alcohol, 2-hexyldecanol, 3,9-diethyl-6-tridecanol, 2-isoheptylisoundecanol, 2-octyldodecanol, and 2-decyltetradecanol. Examples of the diol include various diols described above as examples of the polyol compound (d1). These monoalcohols and diols may be used alone or in combination of two or more thereof.

Examples of the hydroxyl-group-containing (meth)acrylate compound (d3) serving as a starting material of the poly(meth)acrylates (D1) and (D2) having a urethane structure include hydroxy mono(meth)acrylates such as 2-hydroxyethyl (meth)acrylate, 2-hydroxypropyl (meth)acrylate, 4-hydroxybutyl (meth)acrylate, and 2-hydroxy 3-phenoxypropyl (meth)acrylate; hydroxy di(meth)acrylates such as glycerin di(meth)acrylate and trimethylolpropane di(meth)acrylate; hydroxy tri(meth)acrylates such as pentaerythritol tri(meth)acrylate; and hydroxy penta(meth)acrylates such as dipentaerythritol penta(meth)acrylate and sorbitol penta(meth)acrylate. These compounds may be used alone or in combination of two or more thereof.

The poly(meth)acrylates (D1) and (D2) having a urethane structure may be used alone or in combination of two or more thereof.

The poly(meth)acrylates (D1) and (D2) having a urethane structure can be prepared by, for example, properly using a urethane-forming catalyst such as tin(II) octanoate or zinc(II) octanoate in the temperature range of 20°C to 120°C. The reaction may be performed in the absence of solvents or in the presence of a solvent that is inert to hydroxyl groups and isocyanate groups, such as toluene, xylene, methyl ethyl ketone, or methyl isobutyl ketone.

The acrylic-polymer poly(meth)acrylate (E) is, for example, an acrylic-polymer poly(meth)acrylate (E1) prepared by an addition reaction of a monomer (e2) having a (meth)acryloyl group and a carboxyl group to a (meth)acrylic polymer (e1) having an epoxy group; an acrylic-polymer poly(meth)acrylate (E2) prepared by an addition reaction of a monomer (e4) having a (meth)acryloyl group and an epoxy group to a (meth)acrylic polymer (e3) having a carboxyl group; or an acrylic-polymer poly(meth)acrylate (E3) prepared by an addition reaction of a monomer (e6) having a (meth)acryloyl group and a single isocyanate group to a (meth)acrylic polymer (e5) having a hydroxyl group.

The acrylic-polymer poly(meth)acrylate (E1) will be first described. The (meth)acrylic polymer (e1) having an epoxy group used as a starting material of the acrylic-polymer poly(meth)acrylate (E1) is prepared by, for example, a homopolymerization reaction of a polymerizable monomer (G) having a (meth)acryloyl group and an epoxy group, or a copolymerization reaction between the polymerizable monomer (G) and another polymerizable monomer (H).

Examples of the polymerizable monomer (G) having a (meth)acryloyl group and an epoxy group used as a starting material of the (meth)acrylic polymer (e1) having an epoxy group include glycidyl (meth)acrylate, glycidyl α-ethyl(meth)acrylate, glycidyl α-n-propyl(meth)acrylate, glycidyl α-n-butyl(meth)acrylate, 3,4-epoxybutyl (meth)acrylate, 4,5-epoxypentyl (meth)acrylate, 6,7-epoxypentyl (meth)acrylate, 6,7-epoxypentyl α-ethyl(meth)acrylate, β-methylglycidyl (meth)acrylate, 3,4-epoxycyclohexyl (meth)acrylate, lactone-modified 3,4-epoxycyclohexyl (meth)acrylate, and vinylcyclohexene oxide. These monomers may be used alone or in combination of two or more thereof. Of these, glycidyl (meth)acrylate, glycidyl α-ethyl(meth)acrylate, and glycidyl α-n-propyl(meth)acrylate are particularly preferred because the (meth)acryloyl group equivalent of the acrylic-polymer poly(meth)acrylate (E1) can be easily adjusted to satisfy the above-described preferred range.

Examples of the other polymerizable monomer (H) used as a starting material of the (meth)acrylic polymer (e1) having an epoxy group include (meth)acrylic acid esters having an alkyl group having 1 to 22 carbons such as methyl (meth)acrylate, ethyl (meth)acrylate, propyl (meth)acrylate, n-butyl (meth)acrylate, t-butyl (meth)acrylate, hexyl (meth)acrylate, heptyl (meth)acrylate, octyl (meth)acrylate, nonyl (meth)acrylate, decyl (meth)acrylate, dodecyl (meth)acrylate, tetradecyl (meth)acrylate, hexadecyl (meth)acrylate, stearyl (meth)acrylate, octadecyl (meth)acrylate, and docosyl (meth)acrylate;
(meth)acrylic acid esters having an alicyclic alkyl group such as cyclohexyl (meth)acrylate, isobornyl (meth)acrylate, dicyclopentanyl (meth)acrylate, and dicyclopentenyloxyethyl (meth)acrylate;
(meth)acrylic acid esters having an aromatic ring such as benzoyloxyethyl (meth)acrylate, benzyl (meth)acrylate, phenylethyl (meth)acrylate, phenoxyethyl (meth)acrylate, phenoxydiethylene glycol (meth)acrylate, and 2-hydroxy-3-phenoxypropyl (meth)acrylate;
acrylic acid esters having a hydroxyalkyl group such as hydroxyethyl (meth)acrylate; hydroxypropyl (meth)acrylate, hydroxybutyl (meth)acrylate, glycerol (meth)acrylate; lactone-modified hydroxyethyl (meth)acrylate, and (meth)acrylic acid esters having a polyalkylene glycol group such as polyethylene glycol (meth)acrylate and polypropylene glycol (meth)acrylate;
unsaturated dicarboxylic acid esters such as dimethyl fumarate, diethyl fumarate, dibutyl fumarate, dimethyl itaconate, dibutyl itaconate, methyl ethyl fumarate, methyl butyl fumarate, and methyl ethyl itaconate;
styrene and styrene derivatives such as α-methyl styrene and chlorostyrene;
diene-based compounds such as butadiene, isoprene, piperylene, and dimethylbutadiene;
vinyl halides such as vinyl chloride and vinyl bromide, and vinylidene halides;
unsaturated ketones such as methyl vinyl ketone and butyl vinyl ketone;
vinyl esters such as vinyl acetate and vinyl butyrate;
vinyl ethers such as methyl vinyl ether and butyl vinyl ether;
vinyl cyanides such as acrylonitrile, methacrylonitrile, and vinylidene cyanide;
acrylamide and alkyd-substituted amides thereof;
N-substituted maleimides such as N-phenyl maleimide and N-cyclohexyl maleimide;
fluorine-containing α-olefins such as vinyl fluoride, vinylidene fluoride, trifluoroethylene, chlorotrifluoroethylene, bromotrifluoroethylene, pentafluoropropylene, and hexafluoropropylene;
(per)fluoroalkyl perfluorovinyl ethers having a (per)fluoroalkyl group having 1 to 18 carbons such as trifluoromethyl trifluorovinyl ether, pentafluoroethyl trifluorovinyl ether, and heptafluoropropyl trifluorovinyl ether;
(per)fluoroalkyl (meth)acrylates having a (per)fluoroalkyl group having 1 to 18 carbons such as 2,2,2-trifluoroethyl (meth)acrylate, 2,2,3,3-tetrafluoropropyl (meth)acrylate, 1H, 1H, 5H-octafluoropentyl (meth) acrylate, 1H, 1H, 2H, 2H-heptadecafluorodecyl (meth)acrylate, and perfluoroethyloxyethyl (meth)acrylate;
silyl-group-containing (meth)acrylates such as γ-methacryloxypropyltrimethoxysilane; and
N,N-dialkylaminoalkyl (meth)acrylates such as N,N-dimethylaminoethyl (meth)acrylate, N,N-diethylaminoethyl (meth)acrylate, and N,N-diethylaminopropyl (meth)acrylate. These monomers may be used alone or in combination of two or more thereof. Of these, because the (meth)acryloyl group equivalent of the acrylic-polymer poly(meth)acrylate (E1) can be easily adjusted to satisfy the above-described preferred range and the resultant coating films are not excessively brittle, the (meth)acrylic acid esters having an alkyl group having 1 to 22 carbons and the (meth)acrylic acid esters having an alicyclic alkyl group are preferred, more preferably the (meth)acrylic acid esters having an alkyl group having 1 to 22 carbons. In particular, methyl (meth)acrylate, ethyl (meth)acrylate, propyl (meth)acrylate, n-butyl (meth)acrylate, and t-butyl (meth)acrylate are preferred.

As described above, the (meth)acrylic polymer (e1) having an epoxy group may be a homopolymer of a polymerizable monomer (G) having a (meth)acryloyl group and an epoxy group, or a copolymer between the polymerizable monomer (G) and another polymerizable monomer (H). In particular, to adjust the epoxy equivalent of the resultant acrylic polymer (e1) to satisfy a preferred range, preferred is a polymer prepared by copolymerization such that a mass ratio [polymerizable monomer (G) having a (meth)acryloyl group and an epoxy group] : [another polymerizable monomer (H)] in copolymerization satisfies the range of 25 to 100 parts by mass : 75 to 0 parts by mass, more preferably the range of 40 to 100 parts by mass : 60 to 0 parts by mass.

The epoxy equivalent of the (meth)acrylic polymer (e1) having an epoxy group is preferably in the range of 80 to 500 g/eq, more preferably 120 to 470 g/eq, particularly preferably 150 to 400 g/eq, because the acryloyl equivalent of the resultant acrylic-polymer poly(meth)acrylate (E1) can be easily adjusted to satisfy the range of 100 to 600 g/eq.

The (meth)acrylic polymer (e1) having an epoxy group can be prepared by, for example, addition polymerization in the temperature range of 80°C to 150°C in the presence of a polymerization initiator. The (meth)acrylic polymer (e1) may be, for example, a random copolymer, a block copolymer, or a graft copolymer. The copolymerization process usable may be, for example, a bulk polymerization process, a solution polymerization process, a suspension polymerization process, or an emulsion polymerization process. Of these, because the reaction can be continuously followed by a reaction between the (meth)acrylic polymer (e1) and the polymerizable monomer (e2) having a (meth)acryloyl group and a carboxyl group, the solution polymerization process is preferred.

When the (meth)acrylic polymer (e1) having an epoxy group is prepared by the solution polymerization process, a solvent used in the process has a boiling point of 80°C or more in view of the reaction temperature. Examples of the solvent include ketone solvents such as methyl ethyl ketone, methyl n-propyl ketone, methyl isopropyl ketone, methyl n-butyl ketone, methyl isobutyl ketone, methyl n-amyl ketone, methyl n-hexyl ketone, diethyl ketone, ethyl n-butyl ketone, di-n-propyl ketone, diisobutyl ketone, cyclohexanone, and phorone;
ether solvents such as n-butyl ether, diisoamyl ether, ethylene glycol dimethyl ether, ethylene glycol diethyl ether, diethylene glycol dimethyl ether, diethylene glycol, and dioxane;
ester solvents such as n-propyl acetate, isopropyl acetate, n-butyl acetate, n-amyl acetate, ethylene glycol monomethyl ether acetate, ethylene glycol monoethyl ether acetate, diethylene glycol monomethyl ether acetate, diethylene glycol monoethyl ether acetate, propylene glycol monomethyl ether acetate, and ethyl-3-ethoxypropionate;
alcohol solvents such as isopropyl alcohol, n-butyl alcohol, isobutyl alcohol, diacetone alcohol, 3-methoxy-1-propanol, 3-methoxy-1-butanol, and 3-methyl-3-methoxybutanol; and
hydrocarbon solvents such as toluene, xylene, Solvesso 100, Solvesso 150, Swasol 1800, Swasol 310, Isopar E, Isopar G, Exxon Naphtha 5, and Exxon Naphtha 6. These solvents may be used alone or in combination of two or more thereof.

Among the above-described solvents, preferred are ketone solvents such as methyl ethyl ketone and methyl isobutyl ketone because they are excellent in dissolubility for the resultant (meth)acrylic polymer (e1) having an epoxy group.

Examples of the catalyst used in the preparation of the (meth)acrylic polymer (e1) having an epoxy group include azo compounds such as 2,2'-azobisisobutyronitrile, 2,2'-azobis-(2,4-dimethylvaleronitrile), and 2,2'-azobis-(4-methoxy-2,4-dimethylvaleronitrile); organic peroxides such as benzoyl peroxide, lauroyl peroxide, t-butyl peroxypivalate, t-butyl peroxyethylhexanoate, 1,1'-bis-(t-butylperoxy)cyclohexane, t-amylperoxy-2-ethylhexanoate, and t-hexylperoxy-2-ethylhexanoate, and hydrogen peroxide.

When a peroxide is used as the catalyst, the peroxide may be used in conjunction with a reducing agent to provide a redox initiator.

Examples of the monomer (e2) having a (meth)acryloyl group and a carboxyl group used as a starting material of the acrylic-polymer poly(meth)acrylate (E1) include (meth)acrylic acid; β-carboxyethyl (meth)acrylate, unsaturated monocarboxylic acids having an ester bond such as 2-acryloyloxyethyl succinic acid, 2-acryloyloxyethyl phthalic acid, 2-acryloyloxyethylhexahydro phthalic acid, and lactone-modified products of the foregoing; maleic acid; and carboxyl-group-containing polyfunctional (meth)acrylates prepared by reactions between acid anhydrides such as succinic anhydride and maleic anhydride and hydroxyl-group-containing polyfunctional (meth)acrylate monomers such as pentaerythritol triacrylate. These monomers may be used alone or in combination of two or more thereof. Of these, (meth)acrylic acid, β-carboxyethyl (meth)acrylate, and 2-acryloyloxyethyl succinic acid are preferred, particularly preferably (meth)acrylic acid, because the (meth)acryloyl group equivalent of the acrylic-polymer poly(meth)acrylate (E1) can be easily adjusted to satisfy the above-described preferred range.

The acrylic-polymer poly(meth)acrylate (E1) can be prepared by the reaction between the (meth)acrylic polymer (e1) having an epoxy group and the monomer (e2) having a (meth)acryloyl group and a carboxyl group. For example, this reaction may be performed by the following process: the (meth)acrylic polymer (e1) having an epoxy group is prepared by a solution polymerization process; to the reaction system, the monomer (e2) having a (meth)acryloyl group and a carboxyl group is added and a catalyst such as triphenylphosphine is appropriately used in the temperature range of 80°C to 150°C. The acryloyl equivalent of the acrylic-polymer poly(meth)acrylate (E1) is preferably in the range of 100 to 600 g/eq. This acryloyl equivalent can be adjusted by changing the reaction proportion between the (meth)acrylic polymer (e1) having an epoxy group and the monomer (e2) having a (meth)acryloyl group and a carboxyl group. Normally, when the reaction is caused such that the amount of the carboxyl group of the monomer (e2) having a (meth)acryloyl group and a carboxyl group is in the range of 0.4 to 1.1 mol with respect to 1 mol of the epoxy group of the (meth)acrylic polymer (e1) having an epoxy group, the (meth)acryloyl equivalent of the resultant acrylic-polymer poly(meth)acrylate (E1) can be adjusted so as to satisfy the above-described preferred range.

The thus-prepared acrylic-polymer poly(meth)acrylate (E1) intramolecularly has a hydroxyl group generated by the reaction between the carboxyl group and the epoxy group. For the purpose of adjusting the acryloyl equivalent of the acrylic-polymer poly(meth)acrylate (E1) so as to satisfy the preferred range, an acrylic-polymer poly(meth)acrylate (E1') prepared by an addition reaction of a monomer (I) having a single isocyanate group and a (meth)acryloyl group to the hydroxyl group can be optionally used as the compound (A) according to the present invention.

The monomer (I) having a single isocyanate group and a (meth)acryloyl group may be, for example, a compound represented by a general formula 1 below and examples thereof include a monomer having one isocyanate group and one (meth)acryloyl group, a monomer having one isocyanate group and two (meth)acryloyl groups, a monomer having one isocyanate group and three (meth)acryloyl groups, a monomer having one isocyanate group and four (meth)acryloyl groups, and a monomer having one isocyanate group and five (meth)acryloyl groups.

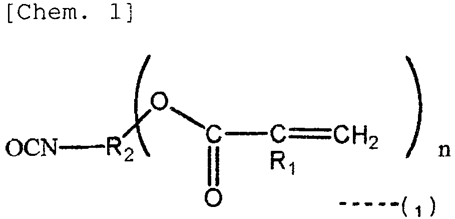

In the general formula (1), R₁ represents a hydrogen atom or a methyl group; R₂ represents an alkylene group having 2 to 4 carbon atoms; and n represents an integer of 1 to 5.

Specific product examples of the monomer (I) having a (meth)acryloyl group and a single isocyanate group include 2-acryloyloxyethyl isocyanate (for example, trade name: "Karenz AOI" manufactured by SHOWA DENKO K. K.), 2-methacryloyloxyethyl isocyanate (for example, trade name: "Karenz MOI" manufactured by SHOWA DENKO K. K.), and 1,1-bis(acryloyloxymethyl)ethyl isocyanate (for example, trade name: "Karenz BEI" manufactured by SHOWA DENKO K. K.). Additional examples include compounds prepared by addition of a hydroxyl-group-containing (meth)acrylate compound to a single isocyanate group of a diisocyanate compound. Examples of the diisocyanate compound used in this reaction include various diisocyanate monomers described above as examples of the polyisocyanate compound (d1). Examples of the hydroxyl-group-containing (meth)acrylate compound used in the reaction include various hydroxyl-group-containing (meth)acrylate compounds described above as examples of the hydroxyl-group-containing (meth)acrylate compound (d3). These compounds may be used alone or in combination of two or more thereof. Of these, preferred are hydroxy mono(meth)acrylates such as 2-hydroxyethyl (meth)acrylate, 2-hydroxypropyl (meth)acrylate, 4-hydroxybutyl (meth)acrylate, and 2-hydroxy 3-phenoxypropyl (meth)acrylate, particularly preferred are 2-hydroxyethyl (meth)acrylate and 2-hydroxypropyl (meth)acrylate, because the (meth)acryloyl group equivalent of the resultant acrylic-polymer poly(meth)acrylate (E1') can be easily adjusted to satisfy the above-described preferred range.

The reaction between the acrylic-polymer poly(meth)acrylate (E1) and the monomer (I) having a single isocyanate group and a (meth)acryloyl group may be caused by, for example, the following process: the monomer (I) having a (meth)acryloyl group and a single isocyanate group is added dropwise to the acrylic-polymer poly(meth)acrylate (E1) and the resultant mixture is heated to 50°C to 120°C.

Between the acrylic-polymer poly(meth)acrylates (E1) and (E1'), the acrylic-polymer poly(meth)acrylate (E1) is preferred because it has more hydroxyl groups in the molecule so that interaction between the hydroxyl groups and the inorganic fine particles (C) results in enhancement of the capability of dispersing the inorganic fine particles (C).

Hereinafter, the acrylic-polymer poly(meth)acrylate (E2) will be described.

The (meth)acrylic polymer (e3) having a carboxyl group used as a starting material of the acrylic-polymer poly(meth)acrylate (E2) is prepared by, for example, a homopolymerization reaction of a polymerizable monomer (J) having a (meth)acryloyl group and a carboxyl group, or a copolymerization reaction between the polymerizable monomer (J) and another polymerizable monomer (K).

Examples of the polymerizable monomer (J) having a (meth)acryloyl group and a carboxyl group used as a starting material of the (meth)acrylic polymer (e3) having a carboxyl group include various monomers described above as examples of the monomer (e2) having a (meth)acryloyl group and a carboxyl group. These monomers may be used alone or in combination of two or more thereof.

Examples of the other polymerizable monomer (K) used as a starting material of the (meth)acrylic polymer (e3) having a carboxyl group include various monomers described above as examples of the other polymerizable monomer (H). These monomers may be used alone or in combination of two or more thereof.

The (meth)acrylic polymer (e3) having a carboxyl group may be a homopolymer of the polymerizable monomer (J) having a (meth)acryloyl group and a carboxyl group or a copolymer between the polymerizable monomer (J) and another polymerizable monomer (K). In particular, to adjust the epoxy equivalent of the resultant acrylic polymer (e3) to satisfy a preferred range, copolymerization is preferably performed such that a mass ratio [polymerizable monomer (J) having a (meth)acryloyl group and a carboxyl group]:[another polymerizable monomer (K)] satisfies the range of 25 to 100 parts by mass : 75 to 0 parts by mass, more preferably the range of 40 to 100 parts by mass : 60 to 0 parts by mass.

For example, the (meth)acrylic polymer (e3) having a carboxyl group can be prepared under the same conditions as in the preparation of the (meth)acrylic polymer (e1) having an epoxy group.

Examples of the monomer (e4) having a (meth)acryloyl group and an epoxy group used as a starting material of the acrylic-polymer poly(meth)acrylate (E2) include various monomers described above as examples of the polymerizable monomer (F) having a (meth)acryloyl group and an epoxy group. These monomers may be used alone or in combination of two or more thereof.

The acrylic-polymer poly(meth)acrylate (E2) can be prepared by the reaction between the (meth)acrylic polymer (e3) having a carboxyl group and the monomer (e4) having a (meth)acryloyl group and an epoxy group. For example, this reaction may be performed by the following process: the (meth)acrylic polymer (e1) having an epoxy group is prepared by a solution polymerization process; to the reaction system, the monomer (e2) having a (meth)acryloyl group and a carboxyl group is added and a catalyst such as triphenylphosphine is appropriately used under a temperature condition of 80°C to 150°C. The (meth)acryloyl equivalent of the acrylic-polymer poly(meth)acrylate (E2) is preferably in the range of 100 to 600 g/eq. This (meth)acryloyl equivalent can be adjusted by changing the reaction proportion between the (meth)acrylic polymer (e3) having a carboxyl group and the monomer (e4) having a (meth)acryloyl group and an epoxy group. Normally, when the reaction is caused such that the amount of the epoxy group of the monomer (e4) having a (meth)acryloyl group and an epoxy group is in the range of 0.4 to 1.1 mol with respect to 1 mol of the carboxyl group of the (meth)acrylic polymer (e3) having a carboxyl group, the acryloyl equivalent of the resultant acrylic (meth)acrylate (E2) can be adjusted so as to satisfy the above-described preferred range.

The thus-prepared acrylic-polymer poly(meth)acrylate (E2) intramolecularly has a hydroxyl group generated by the reaction between the carboxyl group and the epoxy group. For the purpose of adjusting the acryloyl equivalent of the acrylic (meth)acrylate (E1) so as to satisfy the preferred range, an acrylic-polymer poly(meth)acrylate (E2') prepared by an addition reaction of the monomer (I) having a single isocyanate group and a (meth)acryloyl group to the hydroxyl group can be optionally used. This reaction can be performed under the same conditions as in the reaction between the acrylic-polymer poly(meth)acrylate (E1) and the monomer (I) having a single isocyanate group and a (meth)acryloyl group.

Hereinafter, the acrylic-polymer poly(meth)acrylate (E3) will be described.

The (meth)acrylic polymer (e5) having a hydroxyl group used as a starting material of the acrylic-polymer poly(meth)acrylate (E3) is prepared by, for example, a homopolymerization reaction of a polymerizable monomer (L) having a (meth)acryloyl group and a hydroxyl group, or a copolymerization reaction between the polymerizable monomer (L) and another polymerizable monomer (M).

Examples of the polymerizable monomer (L) having a (meth)acryloyl group and a hydroxyl group used as a starting material of the (meth)acrylic polymer (e5) having a hydroxyl group include 2-hydroxyethyl acrylate, 2-hydroxypropyl acrylate, 4-hydroxybutyl acrylate, 2,3-dihydroxypropyl acrylate, 2-hydroxyethyl methacrylate, 2-hydroxypropyl methacrylate, 4-hydroxybutyl methacrylate, and 2,3-dihydroxypropyl methacrylate. These monomers may be used alone or in combination of two or more thereof. Of these, 2-hydroxyethyl acrylate and 2-hydroxypropyl acrylate are preferred because the resultant (meth)acrylic polymer (e5) has a high hydroxyl value. By employing a design in which the (meth)acrylic polymer (e5) is made to have a high hydroxyl value so that the finally obtained acrylic-polymer poly(meth)acrylate (E3) has a hydroxyl group, the capability of dispersing the inorganic fine particles (C) can be enhanced.

Examples of the other polymerizable monomer (M) used as a starting material of the (meth)acrylic polymer (e5) having a hydroxyl group include various monomers described above as examples of the other polymerizable monomer (H). These monomers may be used alone or in combination of two or more thereof.

The (meth)acrylic polymer (e5) having a hydroxyl group may be a homopolymer of the polymerizable monomer (L) having a (meth)acryloyl group and a hydroxyl group or a copolymer between the polymerizable monomer (L) and another polymerizable monomer (M). In particular, to adjust the epoxy equivalent of the resultant acrylic polymer (e3) to satisfy a preferred range, copolymerization is preferably performed such that a mass ratio [polymerizable monomer (L) having a (meth)acryloyl group and a hydroxyl group]:[another polymerizable monomer (M)] satisfies the range of 25 to 100 parts by mass : 75 to 0 parts by mass, more preferably the range of 30 to 70 parts by mass : 70 to 30 parts by mass.

For example, the (meth)acrylic polymer (e5) having a hydroxyl group can be prepared under the same temperature and catalyst conditions as in the preparation of the (meth)acrylic polymer (e1) having an epoxy group.

Examples of the solvent used in the preparation of the (meth)acrylic polymer (e5) having a hydroxyl group include various solvents listed above as solvents used for the preparation of the (meth)acrylic polymer (e1) having an epoxy group.

Examples of the monomer (e6) having a (meth)acryloyl group and a single isocyanate group used as a starting material of the acrylic-polymer poly(meth)acrylate (E3) include various compounds described above as examples of the monomer (I) having a (meth)acryloyl group and a single isocyanate group. These monomers may be used alone or in combination of two or more thereof. Of these, monomers intramolecularly having two or more (meth)acryloyl groups are preferred, specifically, 1,1-bis(acryloyloxymethyl)ethyl isocyanate is preferred, because the acrylic-polymer poly(meth)acrylate (E3) becomes a compound having a higher functionality and coating films having a higher hardness can be obtained.

The acrylic-polymer poly(meth)acrylate (E3) can be prepared by the reaction between the (meth)acrylic polymer (e5) having a hydroxyl group and the monomer (e6) having a (meth)acryloyl group and a single isocyanate group. For example, this reaction may be performed by the following process: the (meth)acrylic polymer (e5) having a hydroxyl group is prepared by solution polymerization; to the reaction system, the monomer (e6) having a (meth)acryloyl group and a single isocyanate group is added dropwise and a catalyst such as tin(II) octanoate is appropriately used under the temperature condition of 50°C to 120°C. The acryloyl equivalent of the acrylic-polymer poly(meth)acrylate (E3) is preferably in the range of 100 to 600 g/eq. This acryloyl equivalent can be adjusted by changing the reaction proportion between the (meth)acrylic polymer (e5) having a hydroxyl group and the monomer (e6) having a (meth)acryloyl group and a single isocyanate group. Normally, when the reaction is caused such that the number of moles of the isocyanate group of the monomer (e6) having a (meth)acryloyl group and a single isocyanate group is in the range of 0.7 to 1.2 mol with respect to 1 mol of the hydroxyl group of the (meth)acrylic polymer (a5) having a hydroxyl group, the acryloyl equivalent of the resultant acrylic-polymer poly(meth)acrylate (E3) can be adjusted so as to satisfy the above-described preferred range. When the reaction is caused such that the number of moles of the isocyanate group of the monomer (e6) having a (meth)acryloyl group and a single isocyanate group is in the range of 0.7 to 0.9 mol with respect to 1 mol of the hydroxyl group of the (meth)acrylic polymer (a5) having a hydroxyl group, the resultant acrylic-polymer poly(meth)acrylate (E3) has a hydroxyl group in the molecular structure and the capability of dispersing the inorganic fine particles (C) can be enhanced, which is preferred.

The acrylic-polymer poly(meth)acrylates (E1), (E2), and (E3) may be used alone or in combination of two or more thereof. Of these, the acrylic-polymer poly(meth)acrylates (E1) and (E2) intramolecularly have more hydroxyl groups and hence have high affinity for metal oxide surfaces of the inorganic fine particles (C) and the resultant dispersion is excellent in storage stability, which is preferred. In particular, because synthesis is simpler, the acrylic-polymer poly(meth)acrylate (E1) is preferred, more preferably a reaction product prepared by an addition reaction of (meth)acrylic acid to the (meth)acrylic polymer (e1) having an epoxy group prepared from glycidyl (meth)acrylate.

The acrylic-polymer poly(meth)acrylates (E1) and (E2) preferably have a hydroxyl value in the range of 90 to 280 mgKOH/g, more preferably in the range of 140 to 270 mgKOH/g.

The epoxy-compound poly(meth)acrylate (F) is prepared by, for example, an addition reaction of a monomer (f2) having a (meth)acryloyl group and a carboxyl group to a compound (f1) having an epoxy group in the molecular structure, the compound (f1) being other than the (meth)acrylic polymer (e1) having an epoxy group.

Examples of the compound (f1) having an epoxy group in the molecular structure include various diols such as propylene glycol, butanediol, pentanediol, hexanediol, diethylene glycol, dipropylene glycol, triethylene glycol, tripropylene glycol, tetraethylene glycol, polyethylene glycol, polypropylene glycol, neopentyl glycol, neopentyl glycol hydroxypivalate, bisphenol A, bisphenol F, and ethoxylated bisphenol A; modified diols prepared by modifying the hydroxy groups of the above-described various diols with ethylene glycol or propylene glycol; various triols such as trimethylol propane, ethoxylated trimethylol propane, propoxylated trimethylol propane, and glycerin; modified triols prepared by modifying the hydroxy groups of the above-described various triols with ethylene glycol or propylene glycol; polyfunctional aromatic polyols such as phenol novolac and cresol novolac; modified polyfunctional aromatic polyols prepared by modifying the hydroxy groups of the above-described polyfunctional aromatic polyols with ethylene glycol or propylene glycol; compounds prepared by addition of epichlorohydrin or the like to the hydroxy groups of polyfunctional alicyclic polyols or the like that are prepared by hydrogenation of the polyfunctional aromatic polyols and modified polyfunctional polyols; and bisphenol epoxy resins prepared by polymerization between bisphenol A and a diglycidyl ether of bisphenol A, bisphenol F, or the like.

Examples of the monomer (f2) having a (meth)acryloyl group and a carboxyl group include various compounds listed above as the monomer (e2) having a (meth)acryloyl group and a carboxyl group.

The epoxy-compound poly(meth)acrylate (F) has, in the molecular structure, a hydroxyl group generated by the reaction between the epoxy group of the compound (f1) and the carboxyl group of the compound (f2). An epoxy-resin poly(meth)acrylate (F') may be used as the compound (A) according to the present invention, the poly(meth)acrylate (F') being prepared in the following manner: a reaction between the hydroxyl group and the isocyanate groups of a diisocyanate compound is caused such that the number of moles of the isocyanate groups is excessively large with respect to the number of moles of the hydroxyl group, and a reaction between the remaining isocyanate groups and a hydroxyl-group-containing (meth)acrylate is caused.

The poly(meth)acrylate (D) having a urethane structure, the acrylic-polymer poly(meth)acrylate (E), and the epoxy-resin poly(meth)acrylate (F) having been described as examples of the active-energy-ray-curable compound (A) may be used alone or in combination of two or more thereof. Of these, the acrylic-polymer poly(meth)acrylate (E) is preferred because it allows high levels of curling resistance and coating-film hardness and it also allows high dispersion stability for the inorganic fine particles (C).

Hereinafter, an active-energy-ray-curable compound (B) that is used in the present invention, has 3 to 6 (meth)acryloyl groups in the molecular structure, and has a molecular weight in the range of 100 to 600 will be described. In the present invention, combined use of the active-energy-ray-curable compound (A) and the active-energy-ray-curable compound (B) results in an increase in the crosslinking density of coating films, providing coating films having a higher hardness. By using the compound (B) having a relatively low molecular weight and a low viscosity, the viscosity of the slurry can be adjusted to satisfy a range suitable for dispersion with a wet ball mill without using a large amount of an organic solvent. Here, it is particularly mentioned that a dispersion is produced from the slurry containing, as a dispersion medium, the compound (B) whose use as a dispersion medium has been normally difficult. By using the slurry, compatibility among the compound (A), the compound (B), and the inorganic fine particles (C) is considerably enhanced and a dispersion is provided that allows better coating-film properties in terms of hardness, transparency, and the like and is excellent in storage stability.

The active-energy-ray-curable compound (B) used in the present invention is prepared by, for example, addition of 3 to 6 molecules of (meth)acrylic acid chloride to a polyol compound having three or more hydroxyl groups in the molecular structure.

Examples of the polyol compound having three or more hydroxyl groups in the molecular structure include polyol compounds such as trimethylol methane, trimethylol ethane, trimethylol propane, tetramethylol methane, ditrimethylol propane, pentaerythritol, and dipentaerythritol; and modified polyols prepared by modifying the hydroxyl groups of the polyol compounds with a polyalkylene glycol having 1 to 10 alkylene oxide repeating units. The polyalkylene glycol having 1 to 10 alkylene oxide repeating units is, for example, polyethylene glycol or polypropylene glycol having 1 to 10 repeating units.

The active-energy-ray-curable compound (B) may be used alone or in combination of two or more thereof. In particular, because coating films having a higher hardness can be obtained, compounds having 4 or more (meth)acryloyl groups in the molecular structure are preferred, more preferably pentaerythritol tetraacrylate and dipentaerythritol hexaacrylate.

Hereinafter, the inorganic fine particles (C) used in the present invention will be described.

The inorganic fine particles (C) used in the present invention are not particularly limited and may be, for example, silica particles, alumina particles, zirconia particles, titania particles, barium titanate particles, or antimony trioxide particles. These particles may be used alone or in combination of two or more thereof.

As to the particle size of the inorganic fine particles (C), in view of providing coating films having a higher hardness, the average primary particle size is preferably in the range of 5 nm to 300 nm; in view of providing coating films having a higher transparency, the average primary particle size is particularly preferably in the range of 5 nm to 150 nm, most preferably in the range of 5 nm to 50 nm.

In particular, silica fine particles are preferred because of ease of availability and ease of handling. Examples of silica fine particles include dry silica fine particles and wet silica fine particles. The dry silica fine particles are prepared by, for example, firing silicon tetrachloride in oxygen or hydrogen flame. The wet silica fine particles are prepared by, for example, neutralizing sodium silicate with a mineral acid. In a production method according to the present invention, use of silica fine particles of either type can provide a dispersion having high dispersion stability for a long period of time.

A slurry according to the present invention contains, as essential components, the active-energy-ray-curable compound (A), the active-energy-ray-curable compound (B), and the inorganic fine particles (C). In view of providing a dispersion excellent in stability and providing coating films having a high hardness, the mass ratio [compound (A) + compound (B)]/[inorganic fine particles (C)] of the active-energy-ray-curable compounds (A) and (B) serving as organic components of the slurry to the inorganic fine particles (C) serving as an inorganic component of the slurry is preferably in the range of 10 to 90 parts by mass/90 to 10 parts by mass, in particular, preferably 30 to 90 parts by mass/70 to 10 parts by mass. In view of providing coating films having a higher hardness, the mass ratio [compound (A)]/[compound (B)] of the active-energy-ray-curable compound (A) to the active-energy-ray-curable compound (B) that serve as organic components is preferably in the range of 10 to 90 parts by mass/90 to 10 parts by mass, in particular, preferably 10 to 70 parts by mass/90 to 30 parts by mass.

A slurry used in the present invention may optionally contain various additives. Examples of the various additives include a coupling agent (N) and a dispersion aid.

The coupling agent (N) is used to introduce a functional group to the surfaces of the inorganic fine particles (C) for the purpose of enhancing the dispersibility of the inorganic fine particles (C). Examples of the coupling agent (N) include vinyl-based silane coupling agents, epoxy-based silane coupling agents, styrene-based silane coupling agents, methacryloxy-based silane coupling agents, acryloxy-based silane coupling agents, amino-based silane coupling agents, ureide-based silane coupling agents, chloropropyl-based silane coupling agents, mercapto-based silane coupling agents, sulfide-based silane coupling agents, isocyanate-based silane coupling agents, and aluminum-based silane coupling agents.

Examples of the vinyl-based silane coupling agents include vinyltrichlorosilane, vinyltrimethoxysilane, vinyltriethoxysilane, 2-(3,4-epoxycyclohexyl)ethyltrimethoxysilane, 3-glycidoxypropyltrimethoxysilane, 3-glycidoxypropylmethyldiethoxysilane, 3-glycidoxypropyltriethoxysilane, p-styryltrimethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysilane, N-2-(aminoethyl)-3-aminopropylmethyldimethoxysilane, N-2-(aminoethyl)-3-aminopropyltrimethoxysilane, N-2-(aminoethyl)-3-aminopropyltriethoxysilane, 3-aminopropyltrimethoxysilane, 3-aminopropyltriethoxysilane, 3-triethoxysilyl-N-(1,3-dimethyl butylidene)propylamine, N-phenyl-3-aminopropyltrimethoxysilane, hydrochloride of N-(vinylbenzyl)-2-aminoethyl-3-aminopropyltrimethoxysilane, special aminosilanes, 3-ureidepropyltriethoxysilane, 3-chloropropyltrimethoxysilane, 3-mercaptopropylmethyldimethoxysilane, 3-mercaptopropyltrimethoxysilane, bis(triethoxysilylpropyl)tetrasulfide, 3-isocyanatopropyltriethoxysilane, allyltrichlorosilane, allyltriethoxysilane, allyltrimethoxysilane, diethoxymethylvinylsilane, trichlorovinylsilane, vinyltrichlorosilane, vinyltrimethoxysilane, vinyltriethoxysilane, and vinyltris(2-methoxyethoxy)silane.

Examples of the epoxy-based silane coupling agents include diethoxy(glycidyloxypropyl)methylsilane, 2-(3,4-epoxycyclohexyl)ethyltrimethoxysilane, 3-glycidoxypropyltrimethoxysilane, 3-glycidoxypropylmethyldiethoxysilane, and 3-glycidoxypropyltriethoxysilane.

Examples of the styrene-based silane coupling agents include p-styryltrimethoxysilane.

Examples of the methacryloxy-based silane coupling agents include 3-methacryloxypropylmethyldimethoxysilane, 3-methacryloxypropyltrimethoxysilane, 3-methacryloxypropylmethyldiethoxysilane, and 3-methacryloxypropyltriethoxysilane.

Examples of the acryloxy-based silane coupling agents include 3-acryloxypropyltrimethoxysilane.

Examples of the amino-based silane coupling agents include N-2(aminoethyl)3-aminopropylmethyldimethoxysilane, N-2(aminoethyl)3-aminopropyltrimethoxysilane, N-2(aminoethyl)3-aminopropyltriethoxysilane, 3-aminopropyltrimethoxysilane, 3-aminopropyltriethoxysilane, 3-triethoxysilyl-N-(1,3-dimethyl-butylidene)propylamine, and N-phenyl-3-aminopropyltrimethoxysilane.

Examples of the ureide-based silane coupling agents include 3-ureidepropyltriethoxysilane.

Examples of the chloropropyl-based silane coupling agents include 3-chloropropyltrimethoxysilane.

Examples of the mercapto-based silane coupling agents include 3-mercaptopropylmethyldimethoxysilane and 3-mercaptopropyltrimethoxysilane.

Examples of the sulfide-based silane coupling agents include bis(triethoxysilylpropyl)tetrasulfide.

Examples of the isocyanate-based silane coupling agents include 3-isocyanatopropyltriethoxysilane.

Examples of the aluminum-based coupling agents include acetoalkoxyaluminum diisopropylates. The coupling agents may be used alone or in combination of two or more thereof.

Examples of the dispersion aid include phosphoric ester compounds such as isopropyl acid phosphate and triisodecylphosphite. These compounds may be used alone or in combination of two or more thereof. Of these, isopropyl acid phosphate, which is excellent in the dispersion aid capability, is preferred.

Although a slurry used in the present invention contains, as essential components, the active-energy-ray-curable compound (A) and the active-energy-ray-curable compound (B), it may further contain another active-energy-ray-curable compound (O). This compound is used in an amount such that cured coating films to be provided have sufficient properties such as hardness and transparency. The amount is preferably in the range of 0 to 30 parts by mass with respect to 100 parts by mass of the total mass of the compound (A) and the compound (B).

Examples of the active curable compound (O) include a compound (O1) that has one or two (meth)acryloyl groups in the molecular structure and has a molecular weight in the range of 100 to 600, and a compound (O2) that has three to six (meth)acryloyl groups in the molecular structure and has a molecular weight of more than 600 and less than 3,000.

Examples of the compound (O1) that has one or two (meth)acryloyl groups in the molecular structure and has a molecular weight in the range of 100 to 600 include mono(meth)acrylates such as 2-hydroxyethyl (meth)acrylate, 2-hydroxypropyl (meth)acrylate, 2-hydroxybutyl (meth) acrylate, n-butyl (meth)acrylate, isobutyl (meth)acrylate, t-butyl (meth)acrylate, glycidyl (meth)acrylate, acryloylmorpholine, N-vinylpyrrolidone, tetrahydrofurfuryl acrylate, cyclohexyl (meth)acrylate, 2-ethylhexyl (meth)acrylate, isobornyl (meth)acrylate, isodecyl (meth)acrylate, lauryl (meth)acrylate, tridecyl (meth)acrylate, cetyl (meth)acrylate, stearyl (meth)acrylate, benzyl (meth)acrylate, 2-ethoxyethyl (meth)acrylate, 3-methoxybutyl (meth)acrylate, ethylcarbitol (meth)acrylate, phosphoric acid (meth)acrylate, ethylene-oxide-modified phosphoric acid (meth)acrylate, phenoxy (meth)acrylate, ethylene-oxide-modified phenoxy (meth)acrylate, propylene-oxide-modified phenoxy (meth)acrylate, nonyl phenol (meth)acrylate, ethylene-oxide-modified nonyl phenol (meth)acrylate, propylene-oxide-modified nonyl phenol (meth)acrylate, methoxydiethylene glycol (meth)acrylate, methoxypolyethylene glycol (meth)acrylate, methoxypropylene glycol (meth)acrylate, 2-(meth)acryloyloxyethyl-2-hydroxypropyl phthalate, 2-hydroxy-3-phenoxypropyl (meth)acrylate, 2-(meth)acryloyloxyethyl hydrogen phthalate, 2-(meth)acryloyloxypropyl hydrogen phthalate, 2-(meth)acryloyloxypropyl hexahydro hydrogen phthalate, 2-(meth)acryloyloxypropyl tetrahydro hydrogen phthalate, dimethylaminoethyl (meth)acrylate, trifluoroethyl (meth)acrylate, tetrafluoropropyl (meth)acrylate, hexafluoropropyl (meth)acrylate, octafluoropropyl (meth)acrylate, octafluoropropyl (meth)acrylate, and adamantyl mono(meth)acrylate; and di(meth)acrylates such as butanediol di(meth)acrylate, hexanediol di(meth)acrylate, ethoxylated hexanediol di(meth)acrylate, propoxylated hexanediol di(meth)acrylate, diethylene glycol di(meth)acrylate, polyethylene glycol di(meth)acrylate, polypropylene glycol di(meth)acrylate, neopentyl glycol di(meth)acrylate, ethoxylated neopentyl glycol di(meth)acrylate, and hydroxypivalic acid neopentyl glycol di(meth)acrylate.

For example, the compound (O2) that has three to six (meth)acryloyl groups in the molecular structure and has a molecular weight of more than 600 and less than 3,000 can be prepared in the following manner: the hydroxyl groups of a polyol compound having three or more hydroxyl groups in the molecular structure are modified with a polyalkylene glycol having 11 to 20 polyalkylene oxide repeating units, and 3 to 6 molecules of (meth)acrylic acid chloride are added to the resultant polyol compound.

Examples of the polyol compound having three or more hydroxyl groups in the molecular structure include trimethylol methane, trimethylol ethane, trimethylol propane, tetramethylol methane, ditrimethylol propane, pentaerythritol, and dipentaerythritol. The polyalkylene glycol having 11 to 20 polyalkylene oxide repeating units is, for example, polyethylene glycol or polypropylene glycol having 11 to 20 repeating units.

A slurry used in the present invention may optionally contain an organic solvent (S). To readily achieve separation between the slurry and the medium in the dispersion step, the slurry preferably has a viscosity in the range of 10 to 100 mPa·s, more preferably in the range of 3 to 60 mPa·s. To satisfy such a range, the slurry preferably contains the organic solvent (S).

Examples of the organic solvent (S) include ketone solvents such as acetone, methyl ethyl ketone (MEK), and methyl isobutyl ketone (MIBK); cyclic ether solvents such as tetrahydrofuran (THF) and dioxolane; esters such as methyl acetate, ethyl acetate, and butyl acetate; aromatic solvents such as toluene and xylene; and alcohol solvents such as carbitol, cellosolve, methanol, isopropanol, butanol, and propylene glycol monomethyl ether. These solvents may be used alone or in combination of two or more thereof.

Of these, the same solvent as in the synthesis of the active-energy-ray-curable compound (A) is preferably used. Accordingly, ketone solvents are preferred, particularly, methyl ethyl ketone (MEK) and methyl isobutyl ketone (MIBK) are preferred.

The amount of the organic solvent (S) used is adjusted such that the viscosity of the slurry is in the range of 10 to 100 mPa·s. In the present invention, the compound (B) whose use in dispersion with wet ball mills has been normally difficult can be used as a material for the slurry. Accordingly, the amount of the organic solvent (S) used can be reduced relative to ordinary cases. Specifically, the organic solvent (S) is preferably used in the range of 30 to 70 parts by mass with respect to 100 parts by mass of the slurry, in particular, in the range of 30 to 65 parts by mass because a dispersion that has a sufficiently high nonvolatile concentration and does not require concentration steps or the like can be provided.

Hereinafter, a method for producing a dispersion according to the present invention will be described.

A method for producing a dispersion according to the present invention includes
in a wet ball mill including
a vessel (p) filled with a medium,
a rotational shaft (q),
a stirring impeller (r) that has a rotational axis coaxial with the rotational shaft (q) and that is rotated by rotation of the rotational shaft,
a slurry supply port (s) provided in the vessel (p),
a slurry discharge port (t) provided in the vessel (p), and
a shaft seal device (u) disposed in a portion where the rotational shaft penetrates the vessel, the shaft seal device (u) including two mechanical seal units in which seal portions of the two mechanical seal units are sealed with an external sealing liquid,
supplying the above-described slurry through the supply port (s) into the vessel (p); rotating the rotational shaft (q) and the stirring impeller (r) in the vessel (p) to stir the medium and the slurry so that the inorganic fine particles (C) in the slurry are pulverized and the inorganic fine particles (C) are dispersed in the active-energy-ray-curable compound (A) and the active-energy-ray-curable compound (B); and subsequently discharging the slurry through the discharge port.

Hereinafter, the above-described production method employing a wet ball mill according to the present invention will be described in detail with reference to drawings.

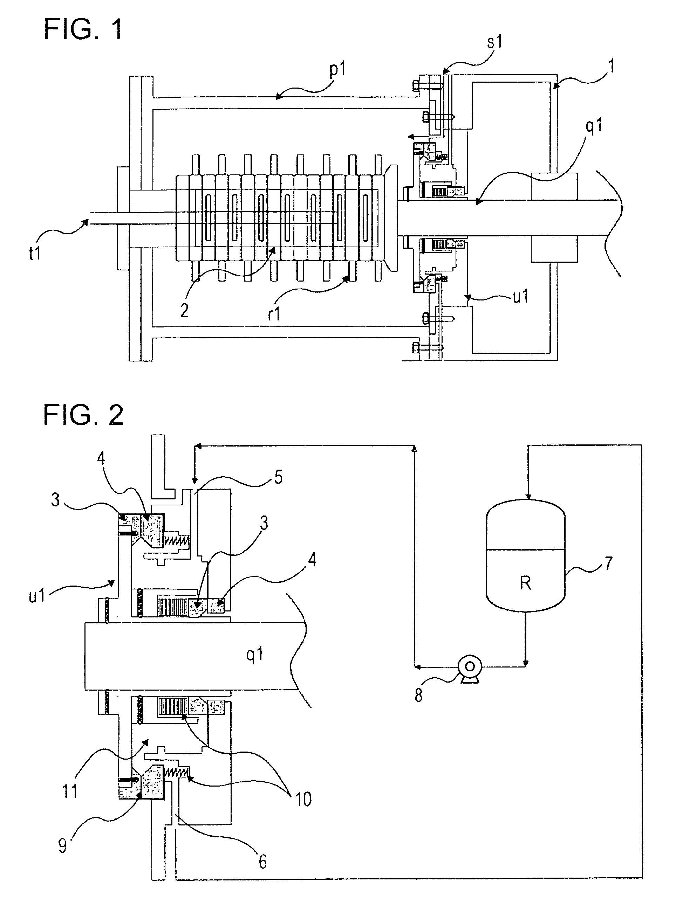

Figs. 1 and 2 relate to a wet ball mill Y used in the present invention. The wet ball mill Y includes a shaft seal device (u1) illustrated in Fig. 2. In the wet ball mill Y, the slurry is supplied through a supply port (s1) into a vessel (p1) in Fig. 1. The vessel (p1) is filled with a medium. A stirring impeller (r1) is rotated by rotation of a rotational shaft (q1) to stir the slurry and the medium so that the inorganic fine particles (C) are pulverized and the inorganic fine particles (C) are dispersed in the active-energy-ray-curable compounds (A) and (B). The rotational shaft (p1) has a hollow having an opening to a discharge port (t1). In the hollow, a screen-type separator 2 is disposed as a separator. Inside the separator 2, a channel extending to the discharge port (t1) is disposed. The slurry in the vessel (p1) is pushed under slurry supply pressure so that it is transported through the opening of the rotational shaft (p1) to the separator 2 disposed inside. The separator 2 does not pass the medium having a large particle size therethrough but does pass only the slurry having a small particle size therethrough, so that the medium remains in the vessel (p1) and only the slurry is discharged through the discharge port (t1).

The wet ball mill Y includes the shaft seal device (u1) illustrated in Fig. 2. The shaft seal device (u1) includes two mechanical seal units each of which has a structure where a rotational ring 3 secured to the shaft (q1) and a fixed ring 4 secured to a housing 1 of the shaft seal device in Fig. 1 are disposed to form a seal portion. In the two units, the rotational ring 3 and the fixed ring 4 are aligned in the same order. The seal portion denotes a pair of sliding surfaces formed by the rotational ring 3 and the fixed ring 4. A liquid seal space 11 is provided between the two mechanical seal units. The liquid seal space 11 is in communication with an external-sealing-liquid supply port 5 and an external-sealing-liquid discharge port 6. An external sealing liquid (R) is circulated in the following manner: the external sealing liquid (R) is sent from an external-sealing-liquid tank 7 with a pump 8, supplied through the external-sealing-liquid supply port 5 into the liquid seal space 11, and returned through the external-sealing-liquid discharge port 6 into the tank 7. Thus, the liquid seal space 11 is filled with the external sealing liquid (R) in fluid-tight manner; and a gap 9 formed, in the seal portion, between the rotational ring 3 and the fixed ring 4 is filled with the external sealing liquid (R). The sealing liquid (R) allows lubrication and cooling of the sliding surfaces between the rotational ring 3 and the fixed ring 4.

The inflow pressure of the external sealing liquid (R) and the pressure applied by a spring 10 are determined such that balance is achieved among a force P1 at which the fixed ring 4 is urged to the rotational ring 3 by the inflow pressure of the external sealing liquid (R), a force P2 at which the fixed ring 4 is urged to the rotational ring 3 by the spring 10, and a force P3 at which the fixed ring 4 is separated from the rotational ring 3 by the inflow pressure of the sealing liquid (R). As a result, the gap 9 between the sliding surfaces of the fixed ring 4 and the rotational ring 3 is filled with the external sealing liquid (R) in fluid-tight manner so that the active-energy-ray-curable compounds (A) and (B) do not enter the gap 9. When the active-energy-ray-curable compounds (A) and (B) flow into the gap 9, sliding between the rotational ring 3 and the fixed ring 4 can cause generation of mechanoradicals from the compounds (A) and (B), and polymerization, resulting in gelation or thickening. However, such risks can be overcome by using a wet ball mill Y including a shaft seal device exemplified as the shaft seal device (u1) according to the present invention.

A shaft seal device exemplified as the shaft seal device (u1) may be, for example, a tandem-type mechanical seal. Examples of a commercially available wet ball mill Y including the tandem-type mechanical seal as the shaft seal device include "LMZ" series manufactured by Ashizawa Finetech Ltd.

The external sealing liquid (R) is an unreactive liquid and examples thereof include various organic solvents listed above as the organic solvent (S). Of these, a solvent that is the same as the solvent contained as a component of the slurry used is preferred. Accordingly, ketone solvents are preferred, in particular, methyl ethyl ketone (MEK) and methyl isobutyl ketone (MIBK) are preferred.

Examples of the medium for filling the vessel (p1) in Fig. 1 include various microbeads. Examples of the material of microbeads include zirconia, glass, titanium oxide, copper, and zirconia silicate. Of these, microbeads composed of zirconia are preferred because they have the highest hardness and are less likely to wear down.

The medium preferably has an average particle size in the range of 10 to 1000 µm in terms of median size because such a medium can be sufficiently separated from the slurry in the separation employing the screen-type separator 2 in Fig. 1; the medium has a high capability of pulverizing silica fine particles and hence allows relatively short dispersion time; and the medium does not apply excessively large impact on silica fine particles and the overdispersion phenomenon of silica fine particles is less likely to occur.

The overdispersion phenomenon denotes a phenomenon that silica fine particles are broken to generate new active surfaces, resulting in reagglomeration. When the overdispersion phenomenon occurs, the dispersion liquid turns into gel.

The filling factor of the medium in the vessel (p1) in Fig. 1 is preferably in the range of 75% to 90% by volume with respect to the internal volume of the vessel because the power required for the dispersion is minimized and the pulverization can be most efficiently performed.

The stirring impeller (r1) is preferably rotated such that the peripheral speed of the tip portions is in the range of 5 to 20 m/sec, more preferably in the range of 8 to 20 m/sec, because a high impact is caused in collision between the medium and the inorganic fine particles (C), enhancing the dispersion efficiency.

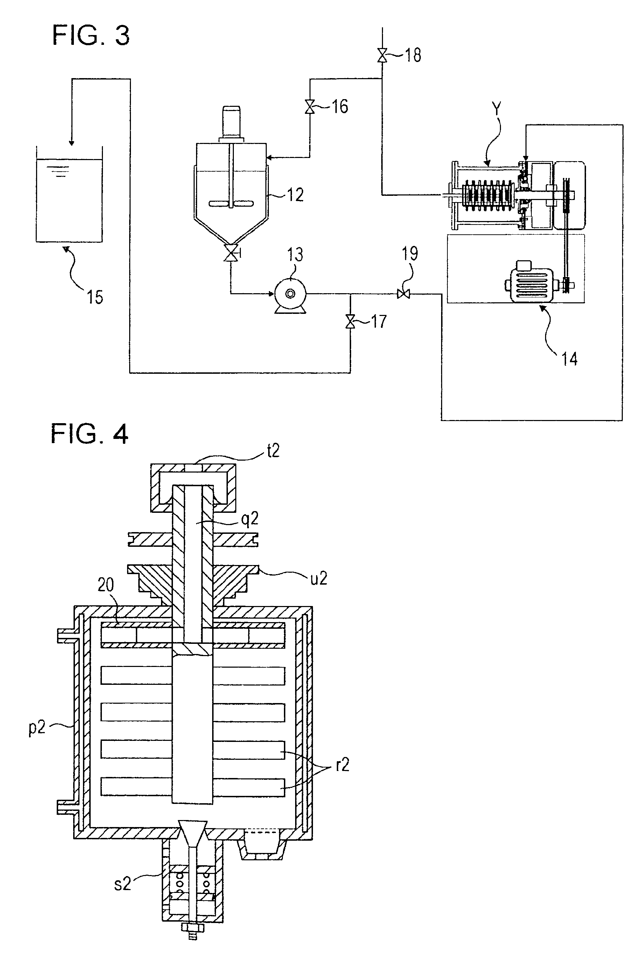

The above-described production method employing the wet ball mill Y may be performed as batch processes or a continuous process. In the case of the continuous process, a circulation type in which the slurry having been discharged is supplied again or a non-circulation type may be employed. In particular, a circulation type illustrated in Fig. 3 is preferred because high productivity is achieved and the resultant dispersion has excellent uniformity.

Fig. 3 is a schematic view of a circulation-type dispersion cycle employing the wet ball mill Y. In Fig. 3, a slurry drawn with a pump 13 from a stock tank 12 storing the slurry is supplied through the supply port (s1) in Fig. 2 into the vessel (p1). The slurry having been dispersed in the vessel (p1) is sent through the discharge port (t1) and returned through a valve 16 in Fig. 1 to the stock tank 12. The slurry having been returned to the tank 12 is again passed through the above-described dispersion path. By repeating this process, circulation dispersion is achieved. The particle size of the slurry is appropriately measured in the course of circulation dispersion and the dispersion is finished when a desired value is achieved.

When the dispersion is performed with the circulation-type dispersion cycle illustrated in Fig. 3, the flow rate of the slurry supplied into the vessel (p1) is equal to the flow rate of the slurry discharged from the vessel (p1) and is preferably, with respect to 1 liter of the volume of the vessel (p1), in the range of 30 to 100 L/h, more preferably in the range of 50 to 80 L/h, because the residence time of the slurry in the vessel (p1) becomes appropriate and the dispersion efficiency is increased.

The pump 13 is preferably a diaphragm pump, which is less likely to cause generation of mehanoradical. Examples of a commercially available diaphragm pump include "TPL" series manufactured by TACMINA CORPORATION.

The slurry is supplied to the vessel (p1) in the following manner. The vessel (p1) of the wet ball mill Y is filled with a medium. Subsequently, in Fig. 3, a motor 14 is first operated in a state where a valve 17 in communication with the product tank and a valve 18 serving as an inlet for compressed air or nitrogen are closed and valves 16 and 19 are opened. The operation of the motor 14 causes rotation of the shaft (q1) and the stirring impeller (r1). The pump 13 is subsequently operated to supply at a constant rate the raw-material slurry in the stock tank 12 through the supply port (s1) into the vessel (p1).

The dispersion is performed in this manner. When the particle size of the inorganic fine particles (C) in the slurry reaches a desired value, the dispersion is finished in the following manner.

The pump 13 is stopped and the motor 14 is then stopped to finish the pulverization. After that, the valve 19 is closed, the valve 17 is then opened and the pump 13 is started again to thereby send the product slurry in the stock tank 12 to a product tank 15. The product slurry remaining in the vessel (p1) may then be drawn in the following manner. The pump 13 is stopped and the valve 17 is closed. The line extending through the valve 16 and returning to the stock tank 12 is connected to the product tank 15 instead of the stock tank 12. The stock tank 12 having been emptied is filled with a solvent of the same type as that of the solvent contained in the slurry. The motor 14 is started again and the pump 13 is started again to thereby collect the product slurry remaining in the vessel (p1) into the product tank 15. At this time, to prevent the solvent from entering the product tank 15, the transfer may be stopped before the entire amount of the product slurry remaining in the vessel (p1) is transferred into the product tank 15. Alternatively, to collect the entire amount of the product slurry into the product tank 15, the transfer may be stopped at timing when the solvent slightly enters the product tank 15.

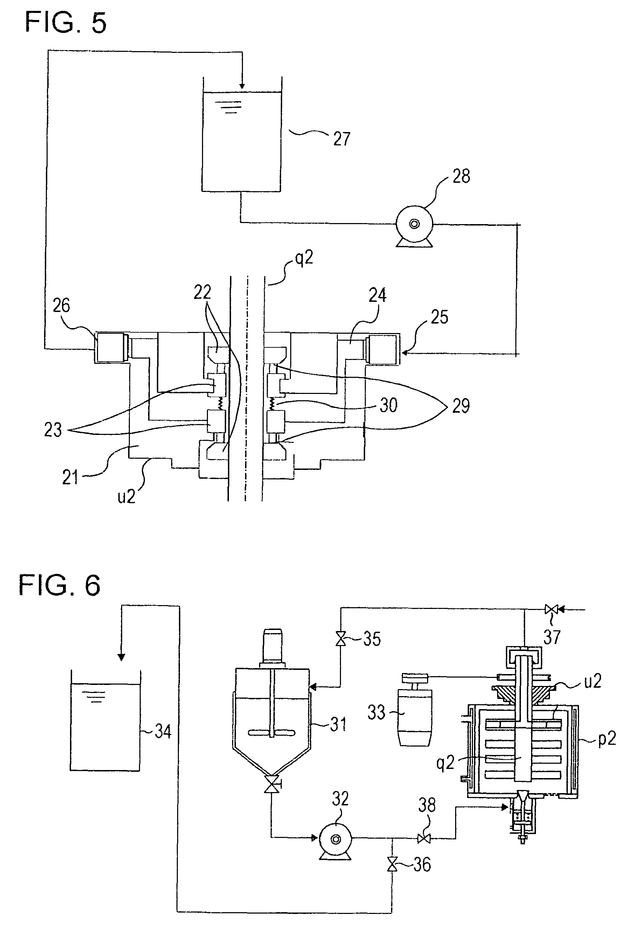

Figs. 4 and 5 relate to a wet ball mill Z used in the present invention. The wet ball mill Z has a feature of having a shaft seal device (u2) illustrated in Fig. 5. In the wet ball mill Z, the slurry is supplied through a supply port (s2) into a vessel (p2) in Fig. 1. The vessel (p2) is filled with a medium. A stirring impeller (r2) is rotated by rotation of a rotational shaft (q2) to stir the slurry and the medium so that the inorganic fine particles (C) are pulverized and the inorganic fine particles (C) are dispersed in the active-energy-ray-curable compounds (A) and (B). An impeller-type separator 20 is disposed as a separator. When the impeller-type separator 20 is rotated coaxially with the shaft (q2), the medium, which has a higher specific gravity, are moved toward radially outer regions, whereas the slurry, which has a lower specific gravity, is induced toward the shaft central portion of a separator 35 and discharged from a discharge port (t2).

The wet ball mill Z includes the shaft seal device (u2) illustrated in Fig. 5. The shaft seal device (u2) includes two mechanical seal units each of which has a structure where a rotational ring 22 secured to the shaft (q2) and a fixed ring 23 secured to a housing 21 of the shaft seal device in Fig. 5 constitute a seal portion. In the two units, the order in which the rotational ring 22 and the fixed ring 23 are aligned is opposite to each other. The seal portion denotes a pair of sliding surfaces formed by the rotational ring 22 and the fixed ring 23. A liquid seal space 24 is provided between the two mechanical seal units. The liquid seal space 24 is in communication with an external-sealing-liquid supply port 25 and an external-sealing-liquid discharge port 26. An external sealing liquid (R) is circulated in the following manner: the external sealing liquid (R) is sent from an external-sealing-liquid tank 27 with a pump 28, supplied through the external-sealing-liquid supply port 25 into the liquid seal space 24, and returned through the external-sealing-liquid discharge port 26 into the tank 27. Thus, the liquid seal space 24 is filled with the sealing liquid (R) in fluid-tight manner, and a gap 29 formed, in the seal portion, between the rotational ring 22 and the fixed ring 23 is filled with the external sealing liquid (R). The sealing liquid (R) allows lubrication and cooling of the sliding surfaces between the rotational ring 22 and the fixed ring 23.

The inflow pressure of the external sealing liquid (R) and the pressure applied by a spring 30 are determined such that balance is achieved among a force P1' at which the fixed ring 23 is urged to the rotational ring 22 by the inflow pressure of the sealing liquid (R), a force P2' at which the fixed ring 23 is urged to the rotational ring 22 by the spring 41, and a force P3' at which the fixed ring 23 is separated from the rotational ring 22 by the inflow pressure of the sealing liquid (R). As a result, the gap 29 between the sliding surfaces of the fixed ring 22 and the rotational ring 23 is filled with the sealing liquid (R) in fluid-tight manner so that the active-energy-ray-curable compounds (A) and (B) do not enter the gap 29. When the active-energy-ray-curable compounds (A) and (B) flow into the gap 29, sliding between the rotational ring 22 and the fixed ring 23 can cause generation of mechanoradicals from the compounds (A) and (B), and polymerization, resulting in gelation or thickening. However, such risks can be overcome by using a wet ball mill Z including a shaft seal device exemplified as the shaft seal device (u2) according to the present invention.

A shaft seal device exemplified as the shaft seal device (u2) may be, for example, a double-type mechanical seal. Examples of a commercially available wet ball mill Z including the double-type mechanical seal as the shaft seal device include "MAX NANO GETTER" series manufactured by Ashizawa Finetech Ltd., and "ULTRA APEX MILL (UAM)" series and "SUPER APEX MILL (SAM)" manufactured by KOTOBUKI INDUSTRIES CO., LTD.

The external sealing liquid (R) is an unreactive liquid and examples thereof include various organic solvents listed above as the organic solvent (S). Of these, a solvent that is the same as the solvent contained as a component of a slurry is preferred. Accordingly, ketone solvents are preferred, in particular, methyl ethyl ketone (MEK) and methyl isobutyl ketone (MIBK) are preferred.

Examples of the medium for filling the vessel (p2) in Fig. 4 include various microbeads. Examples of the material of microbeads include zirconia, glass, titanium oxide, copper, and zirconia silicate. Of these, microbeads composed of zirconia are preferred because they have the highest hardness and are less likely to wear down, and have a high specific gravity and allow sufficient separation from the slurry at the impeller-type separator 35.

The medium preferably has an average particle size in the range of 10 to 1000 µm in terms of median size because such a medium can be sufficiently separated from the slurry in the separation employing the screen-type separator 20 in Fig. 4; the medium has a high capability of pulverizing silica fine particles and allow relatively short dispersion time; and the medium does not apply excessively large impact on silica fine particles and the overdispersion phenomenon of silica fine particles is less likely to occur.

The overdispersion phenomenon denotes a phenomenon that silica fine particles are broken to generate new active surfaces, resulting in reagglomeration. When the overdispersion phenomenon occurs, the dispersion liquid turns into gel.

The filling factor of a medium in the vessel (p2) in Fig. 1 is preferably in the range of 75% to 90% by volume with respect to the internal volume of the vessel because the power required for the dispersion is minimized and the pulverization can be most efficiently performed.

The stirring impeller (r2) is preferably rotated such that the peripheral speed of the tip portions is in the range of 5 to 20 m/sec, more preferably in the range of 8 to 20 m/sec, because a high impact is caused in collision between a medium and the inorganic fine particles (C), enhancing the dispersion efficiency.

The above-described production method employing the wet ball mill Z may be performed as batch processes or a continuous process. In the case of the continuous process, a circulation type in which the slurry having been discharged is supplied again or a non-circulation type may be employed. In particular, a circulation type illustrated in Fig. 6 is preferred because high productivity is achieved and the resultant dispersion has excellent uniformity.

Fig. 6 is a schematic view of a circulation-type dispersion cycle employing the wet ball mill Z. In Fig. 6, a slurry drawn with a pump 32 from a stock tank 31 storing the slurry is supplied through the supply port (s2) in Fig. 2 into the vessel (p2). The slurry having been dispersed in the vessel (p2) is sent through the discharge port (t2) and returned through a valve 35 in Fig. 6 to the stock tank 31. The slurry having been returned to the stock tank 31 is again passed through the above-described dispersion path. By repeating this process, circulation dispersion is achieved. The particle size of the slurry is appropriately measured in the course of circulation dispersion and the dispersion is finished when a desired value is achieved.

When the dispersion is performed with the circulation-type dispersion cycle illustrated in Fig. 6, the flow rate of the slurry supplied into the vessel (p2) is equal to the flow rate of the slurry discharged from the vessel (p2) and is preferably, with respect to 1 liter of the volume of the vessel (p2), in the range of 30 to 100 L/h, more preferably in the range of 50 to 80 L/h, because the residence time of the slurry in the vessel (p2) becomes appropriate and the dispersion efficiency is increased.

The pump 32 is preferably a diaphragm pump, which is less likely to cause generation of mehanoradical. Examples of a commercially available diaphragm pump include "TPL" series manufactured by TACMINA CORPORATION.

The slurry is supplied to the vessel (p2) in the following manner. The vessel (p2) of the wet ball mill Y is filled with a medium. Subsequently, in Fig. 6, a motor 33 is first operated in a state where a valve 36 in communication with the product tank and a valve 37 serving as an inlet for compressed air or nitrogen are closed and valves 35 and 38 are opened. The operation of the motor 33 causes rotation of the shaft (q2) and the stirring impeller (r2). The pump 32 is subsequently operated to supply at a constant rate the raw-material slurry in the stock tank 31 through the supply port (s2) into the vessel (p2).

The dispersion is performed in this manner. When the particle size of the inorganic fine particles (C) in the slurry reaches a desired value, the dispersion is finished in the following manner.

The pump 32 is stopped and the motor 33 is then stopped to finish the pulverization. After that, the valve 38 is closed, the valve 36 is then opened and the pump 32 is started again to thereby send the product slurry in the stock tank 31 to a product tank 34. The product slurry remaining in the vessel (p2) may be then drawn in the following manner. The pump 32 is stopped and the valve 36 is closed. The line extending through the valve 35 and returning to the stock tank 31 is then connected to the product tank 34 instead of the stock tank 31. The stock tank 31 having been emptied is filled with a solvent of the same type as that of the solvent contained in the slurry. The motor 33 is started again and the pump 33 is started again to thereby collect the product slurry remaining in the vessel (p2) into the product tank 34. At this time, to prevent the solvent from entering the product tank 34, the transfer may be stopped before the entire amount of the product slurry remaining in the vessel (p2) is transferred into the product tank 34. Alternatively, to collect the entire amount of the product slurry into the product tank 34, the transfer may be stopped at timing when the solvent slightly enters the product tank 34.

Between the wet ball mills Y and Z, the wet ball mill Y having a screen-type separator is preferred because it has high capability of separating the medium and the slurry from each other.

In a method for producing a dispersion according to the present invention, a pre-dispersion step employing, as the medium, relatively large particles having a median size in the range of 400 to 1000 µm may be performed and subsequently a dispersion step employing, as the medium, relatively small particles having a median size in the range of 15 to 400 µm may be performed.

In the pre-dispersion step, a relatively large medium having a median size in the range of 400 to 1000 µm is used. Since such a medium applies a high impact in collision with the inorganic fine particles (C) and are suitable for pulverization of the inorganic fine particles (C) having a large size, the medium is used to pulverize the inorganic fine particles (C) serving as a raw material so as to have a certain size. In the dispersion step, a relatively small medium having a median size in the range of 15 to 400 µm is used. Although such a medium applies a small impact in collision with the inorganic fine particles (C), the number of the medium contained in a volume is larger than a medium having a large particle size and hence the number of collision with the inorganic fine particles (C) is large. Accordingly, the medium is used for the purpose of pulverizing the inorganic fine particles (C) having been pulverized to a certain degree in the pre-dispersion step, to finer particles.

In a method for producing a dispersion according to the present invention, the two steps of the pre-dispersion step and the dispersion step are preferably performed because dispersion can be performed more efficiently. When the pre-dispersion step is performed for an excessively long time, the overdispersion phenomenon may be caused. Accordingly, the pre-dispersion step is preferably performed such that the slurry is circulated through the vessels (p1) and (p2) for 1 to 3 cycles.

The dispersion produced by a production method according to the present invention may be used alone as a coating material or may be optionally used as an additive in conjunction with another compound. Examples of the additive include UV absorbers, antioxidants, silicon-based additives, organic beads, fluorine-based additives, rheology control agents, defoaming agents, release agents, silane coupling agents, antistatic agents, antifogging agents, coloring agents, organic solvents, and inorganic fillers.

Examples of the UV absorbers include triazine derivatives such as 2-[4-{(2-hydroxy-3-dodecyloxypropyl)oxy}-2-hydroxyphenyl]-4,6-bis(2,4-dimethylphenyl)-1,3,5-triazine and 2-[4-{(2-hydroxy-3-tridecyloxypropyl)oxy}-2-hydroxyphenyl]-4,6-bis(2,4-dimethylphenyl)-1,3,5-triazine, 2-(2'-xanthenecarboxy-5'-methylphenyl)benzotriazole, 2-(2'-o-nitrobenzyloxy-5'-methylphenyl)benzotriazole, 2-xanthenecarboxy-4-dodecyloxybenzophenone, and 2-o-nitrobenzyloxy-4-dodecyloxybenzophenone.

Examples of the antioxidants include hindered-phenol-based antioxidants, hindered-amine-based antioxidants, organic-sulfur-based antioxidants, and phosphoric-ester-based antioxidants. These antioxidants may be used alone or in combination of two or more thereof.

Examples of the silicon-based additives include polyorganosiloxanes having an alkyl group or a phenyl group such as dimethylpolysiloxane, methylphenylpolysiloxane, cyclic dimethylpolysiloxane, methylhydrogenpolysiloxane, polyether-modified dimethylpolysiloxane copolymers, polyester-modified dimethylpolysiloxane copolymers, fluorine-modified dimethylpolysiloxane copolymers, and amino-modified dimethylpolysiloxane copolymers. These additives may be used alone or in combination of two or more thereof.

Examples of organic beads include polymethyl methacrylate beads, polycarbonate beads, polystyrene beads, polyacrylic styrene beads, silicone beads, glass beads, acrylic beads, benzoguanamine-based resin beads, melamine-based resin beads, polyolefin-based resin beads, polyester-based resin beads, polyamide resin beads, polyimide-based resin beads, polyethylene fluoride resin beads, and polyethylene resin beads. Such organic beads preferably have an average bead size of 1 to 10 µm. These beads may be used alone or in combination of two or more thereof.

Examples of the fluorine-based additives include "MEGAFACE" series from DIC Corporation. These additives may be used alone or in combination of two or more thereof.

Examples of the release agents include "TEGO Rad 2200N", "TEGO Rad 2300", and "TEGO Rad 2100" that are manufactured by Evonik Degussa GmbH; "UV3500" manufactured by BYK Japan KK; and "PAINTAD8526" and "SH-29PA" manufactured by Dow Corning Toray Co., Ltd. These agents may be used alone or in combination of two or more thereof.

Examples of the silane coupling agents include various silane coupling agents listed above as the coupling agent (N). These agents may be used alone or in combination of two or more thereof.

Examples of the antistatic agents include pyridinium, imidazolium, phosphonium, ammonium, and lithium salts of bis(trifluoromethanesulfonyl)imide and bis(fluorosulfonyl)imide. These agents may be used alone or in combination of two or more thereof.

Examples of the organic solvents include various organic solvents listed above as the organic solvent (S). These solvents may be used alone or in combination of two or more thereof.

The above-described various additives are preferably used in amounts as long as the additives sufficiently exhibit their effects and do not inhibit ultraviolet curing. Specifically, such an amount is preferably in the range of 0.01 to 40 parts by mass with respect to 100 parts by mass of a dispersion according to the present invention.

A coating material containing a dispersion according to the present invention further contains a photopolymerization initiator (P). Examples of the photopolymerization initiator (P) include various benzophenones such as benzophenone, 3,3'-dimethyl-4-methoxybenzophenone, 4,4'-bisdimethylaminobenzophenone, 4,4'-bisdiethylaminobenzophenone, 4,4'-dichlorobenzophenone, Michler's ketone, and 3,3',4,4'-tetra(t-butylperoxycarbonyl)benzophenone;
xanthones and thioxanthones such as xanthone, thioxanthone, 2-methylthioxanthone, 2-chlorothioxanthone, and 2,4-diethylthioxanthone; various acyloin ethers such as benzoin, benzoin methyl ether, benzoin ethyl ether, and benzoin isopropyl ether;
α-diketories such as benzil and diacetyl; sulfides such as tetramethylthiuram disulfide and p-tolyl disulfide; various benzoic acids such as 4-dimethylamino benzoic acid and ethyl 4-dimethylaminobenzoate; and
3,3'-carbonyl-bis(7-diethylamino)coumarin, 1-hydroxycyclohexyl phenyl ketone, 2,2'-dimethoxy-1,2-diphenylethane-1-one, 2-methyl-1-[4-(methylthio)phenyl]-2-morpholinopropane-1-one, 2-benzyl-2-dimethylamino-1-(4-morpholinophenyl)-butane-1-one, 2-hydroxy-2-methyl-1-phenylpropane-1-one, 2,4,6-trimethylbenzoyldiphenylphosphine oxide, bis(2,4,6-trimethylbenzoyl)phenylphosphine oxide, 1-[4-(2-hydroxyethoxy)phenyl]-2-hydroxy-2-methyl-1-propane-1-one, 1-(4-isopropylphenyl)-2-hydroxy-2-methylpropane-1-one, 1-(4-dodecylphenyl)-2-hydroxy-2-methylpropane-1-one, 4-benzoyl-4'-methyldimethyl sulfide, 2,2'-diethoxyacetophenone, benzyl dimethyl ketal, benzyl-β-methoxyethyl acetal, methyl o-benzoylbenzoate, bis(4-dimethylaminophenyl) ketone, p-dimethylaminoacetophenone, α,α-dichloro-4-phenoxyacetophenone, pentyl-4-dimethylaminobenzoate, 2-(o-chlorophenyl)-4,5-diphenylimidazolyl dimer, 2,4-bis-trichloromethyl-6-[di-(ethoxycarbonylmethyl)amino]phenyl-S-triazine, 2,4-bis-trichloromethyl-6-(4-ethoxy)phenyl-S-triazine, 2,4-bis-trichloromethyl-6-(3-bromo-4-ethoxy)phenyl-S-triazineanthraquinone, 2-t-butylanthraquinone, 2-amylanthraquinone, and β-chloroanthraquinone. These initiators may be used alone or in combination of two or more thereof.

Among the photopolymerization initiators (P), preferred is one or a mixture of two or more selected from the group of 1-hydroxycyclohexyl phenyl ketone, 2-hydroxy-2-methyl-1-phenylpropane-1-one, 1-[4-(2-hydroxyethoxy)phenyl]-2-hydroxy-2-methyl-1-propane-1-one, thioxanthone and thioxanthone derivatives, 2,2'-dimethoxy-1,2-diphenylethane-1-one, 2,4,6-trimethylbenzoyldiphenylphosphine oxide, bis(2,4,6-trimethylbenzoyl)phenylphosphine oxide, 2-methyl-1-[4-(methylthio)phenyl]-2-morpholino-1-propanone, and 2-benzyl-2-dimethylamino-1-(4-morpholinophenyl)-butane-1-one. This is because coating materials that react with light in a wider wavelength range and have high curability can be obtained.

Examples of commercially available products of the photopolymerization initiator include "IRGACURE-184", "IRGACURE-149", "IRGACURE-261", "IRGACURE-369", "IRGACURE-500", "IRGACURE-651", "IRGACURE-754", "IRGACURE-784", "IRGACURE-819", "IRGACURE-907", "IRGACURE-1116", "IRGACURE-1664", "IRGACURE-1700", "IRGACURE-1800", "IRGACURE-1850", "IRGACURE-2959", "IRGACURE-4043", and "DAROCUR-1173" that are manufactured by Ciba Specialty Chemicals; "Lucirin TPO" manufactured by BASF; "KAYACURE DETX", "KAYACURE MBP", "KAYACURE DMBI", "KAYACURE EPA", and "KAYACURE OA" that are manufactured by Nippon Kayaku Co., Ltd.; "VICURE 10" and "VICURE 55" that are manufactured by Stauffer Chemical Company; "Trigonal P1" manufactured by Akzo; "Sandoray 1000" manufactured by Sandoz Ltd.; "DEAP" manufactured by APJOHN; and "Quantacure-PDO", "Quantacure-ITX", and "Quantacure-EPD" that are manufactured by Ward Blenkinsop & Company Limited.

The above-described photopolymerization initiator (P) is preferably used in an amount as long as it sufficiently exhibits the photopolymerization-initiator function and does not cause precipitation of crystals or degradation of coating film properties. Specifically, the amount is preferably in the range of 0.05 to 20 parts by mass, more preferably in the range of 0.1 to 10 parts by mass, with respect to 100 parts by mass of the coating material.

A coating material according to the present invention may further contain various photosensitizers in conjunction with the photopolymerization initiator (P). Examples of the photosensitizers include amines, ureas, sulfur-containing compounds, phosphorus-containing compounds, chlorine-containing compounds, nitriles, and other nitrogen-containing compounds.

A coating material according to the present invention can be applied to various bases and cured by irradiation with active energy rays, so that the resultant coating layers can be used for protecting the surfaces of the bases. In such a case, a coating material according to the present invention may be directly applied to a member whose surface is to be protected. Alternatively, a coating material according to the present invention may be applied to a plastic film (Q) and the resultant member may be used as a protective film for a polarizing plate or the like. Alternatively, a coating material according to the present invention may be applied to the plastic film (Q) to form a coating film and the resultant member may be used as an optical film such as an antireflective film, a diffusion film, or a prism sheet. Since a coating film formed from a coating material according to the present invention has a high hardness and low curling, in particular, a coating material according to the present invention is preferably applied to the plastic film (Q) and used in protective film applications or used as a film-shaped article.

Here, examples of the plastic film (Q) include plastic films composed of polycarbonate, polymethyl methacrylate, polystyrene, polyesters, polyolefins, epoxy resins, melamine resins, triacetyl cellulose resins, ABS resins, AS resins, norbornene-based resins, cyclic olefins, and polyimide resins.

In the application of a coating material according to the present invention to the plastic film (Q), the coating material is preferably applied in an amount such that the mass of the coating material dried is in the range of 0.1 to 30 g/m², preferably in the range of 1 to 20 g/m². When a coating film according to the present invention is formed so as to have a thickness that is 3% or more of the thickness of the plastic film (Q), the coating film has a hardness sufficient for a protective layer. In particular, with respect to the thickness of the plastic film (Q), the coating film preferably has a thickness in the range of 3% to 100%, more preferably in the range of 5% to 100%. In particular, the coating film preferably has a thickness in the range of 5% to 50% of the thickness of the film-shaped base.

Examples of a process for coating a coating material according to the present invention include bar-coater coating, Meyer bar coating, air knife coating, gravure coating, reverse gravure coating, offset printing, flexographic printing, and screen printing.

Examples of an active energy ray applied to cure a coating material according to the present invention to form a coating film include ultraviolet rays and electron beams. When the curing is achieved with ultraviolet rays, an ultraviolet radiation apparatus having, as a light source, a xenon lamp, a high-pressure mercury-vapor lamp, or a metal halide lamp is used; and, for example, the radiation dose and the position of the light source are optionally adjusted. When a high-pressure mercury-vapor lamp is used, the curing is generally preferably performed at a transfer speed of 5 to 50 m/min with respect to a single lamp having a radiation dose of 80 to 160 W/cm. On the other hand, when the curing is caused with electron beams, the curing is generally preferably performed with an electron beam acceleration apparatus having an acceleration voltage in the range of 10 to 300 kV at a transfer speed of 5 to 50 m/min.

A base to which a coating material according to the present invention is applied is not limited to the plastic film (Q). The coating material can also be suitably used as a surface coating agent for various plastic molded articles such as cellular phones, household electrical appliances, and bumpers of automobiles. In such a case, a coating film can be formed by, for example, a coating process, a transfer process, or a sheet bonding process.

The coating process is performed by spray-coating with the coating material or coating a molded article with the coating material as a top coating with a printing apparatus such as a curtain coater, a roll coater, or a gravure coater, and by subsequently curing the coating material through irradiation with an active energy ray.

The transfer process may be performed in the following manner. A transfer member prepared by coating a releasable base sheet with the above-described coating material according to the present invention is bonded to a surface of a molded article; the base sheet is then released to achieve transfer of the top coating onto the surface of the molded article; and the top coating is then cured through irradiation with an active energy ray. Alternatively, the transfer member is bonded to a surface of a molded article; curing is then achieved through irradiation with an active energy ray; and the base sheet is then released to achieve transfer of the top coating onto the surface of the molded article.

On the other hand, the sheet bonding process is performed by bonding, to a plastic molded article, a protective sheet having a coating film formed from the above-described coating material according to the present invention on a base sheet or a protective sheet having a coating film formed from the coating material and a decorative layer on a base sheet, to thereby form a protective layer on the surface of the molded article.

In particular, a coating material according to the present invention is preferably applicable to the transfer process or the sheet bonding process.

In the transfer process, the transfer member is first prepared. For example, the transfer member can be prepared by applying the coating material alone or a mixture of the coating material and a polyisocyanate compound onto a base sheet, and by making the coating film semi-cured (in the B-stage) through heating.

Here, when the active-energy-ray-curable compound (A) is a compound having a hydroxyl group in the molecular structure such as the acrylic-polymer poly(meth)acrylates (E1) and (E2) or the epoxy-resin poly(meth)acrylate (F), it may be used in conjunction with a polyisocyanate compound for the purpose of performing the B-stage step more efficiently.

To prepare the transfer member, the above-described coating material according to the present invention is first applied to a base sheet. Examples of a process for applying the coating material include coating processes such as a gravure coating process, a roll coating process, a spray coating process, a LIP coating process, and a comma coating process; and printing processes such as a gravure printing process and a screen printing process. As to a film thickness in the coating, to achieve high wear resistance and chemical resistance, the coating is preferably performed such that the thickness of the coating film cured is 0.5 to 30 µm, more preferably, 1 to 6 µm.

After the base sheet is coated with the coating material by such a process, the coating film is made semi-cured (in the B-stage) by drying under heating. The heating is generally performed at 55°C to 160°C, preferably 100°C to 140°C. The heating time is generally 30 seconds to 30 minutes, preferably 1 to 10 minutes, more preferably 1 to 5 minutes.

The formation of the surface protective layer of a molded article by using the transfer member is achieved by, for example, bonding the B-stage resin layer of the transfer member and the molded article, and subsequently curing the resin layer through irradiation with an active energy ray. Specifically, for example, the following processes may be performed: a process (transfer process) in which the B-stage resin layer of the transfer member is bonded to a surface of the molded article, the base sheet of the transfer member is then released to achieve transfer of the B-stage resin layer of the transfer member onto the surface of the molded article, and the resin layer is then cured (curing through crosslinking) with an energy ray by irradiation with an active energy ray; and a process (simultaneous molding-transfer process) in which the transfer member is placed in a mold and a resin is injected to fill the cavity so that the resin molded article is obtained and simultaneously the transfer member is bonded to the surface of the resin molded article, the base sheet is released to achieve the transfer of the resin layer onto the molded article, and the resin layer is then cured (curing through crosslinking) with an energy ray by irradiation with an active energy ray.

Specific examples of the sheet bonding process are as follows: a process (later bonding process) in which the base sheet of a protective-layer-formation sheet prepared in advance is bonded to a molded article and the B-stage resin layer is then thermally cured (curing through crosslinking) under heating; and a process (simultaneous molding-bonding process) in which the protective-layer-formation sheet is placed in a mold and a resin is injected to fill the cavity so that the resin molded article is obtained and simultaneously the protective-layer-formation sheet is bonded to the surface of the resin molded article, and the resin layer is then thermally cured (curing through crosslinking) under heating.

A coating film according to the present invention is a coating film formed by applying a coating material according to the present invention to the plastic film (Q) and curing the coating material, or a coating film formed by applying a coating material according to the present invention as a surface protective agent for a plastic molded article and curing the coating material. A film according to the present invention is a film in which a coating film is formed on the plastic film (Q).

Among the above-described various applications of the film, as described above, a preferred application is that a film formed by applying a coating material according to the present invention to the plastic film (Q) and irradiating the coating material with an active energy ray is used as a protective film for a polarizing plate used for a liquid crystal display, touch panel display, or the like because the coating film is excellent in hardness. Specifically, when a coating material according to the present invention is applied to a protective film for a polarizing plate used for a liquid crystal display, touch panel display, or the like and the coating material is cured through irradiation with an active energy ray to form a film, the resultant protective film has the coating film that has high hardness and high transparency. In the applications of a protective film for a polarizing plate, an adhesive layer may be formed on a surface opposite to a coating layer formed by applying a coating material according to the present invention.

### EXAMPLES

Hereinafter, the present invention will be specifically described with reference to examples and comparative examples. In EXAMPLES, all parts and % are by mass unless otherwise specified.

Note that, in EXAMPLES according to the present invention, the weight-average molecular weight (Mw) and the number-average molecular weight (Mn) are values measured by a gel permeation chromatograph (GPC) under the following conditions.

Measurement apparatus: HLC-8220, manufactured by Tosoh Corporation
Columns: Guard column H_{XL}-H, manufactured by Tosoh Corporation + TSKgel G5000H_{XL}, manufactured by Tosoh Corporation + TSKgel G4000H_{XL}, manufactured by Tosoh Corporation + TSKgel G3000H_{XL}, manufactured by Tosoh Corporation + TSKgel G2000H_{XL}, manufactured by Tosoh Corporation
Detector: RI (differential refractometer)
Data processing: SC-8010, manufactured by Tosoh Corporation
Measurement conditions: Column temperature 40°C
   Solvent tetrahydrofuran
   Flow rate 1.0 ml/min
Standard: polystyrene
Sample: 0.4% by weight tetrahydrofuran solution (100 µl) in terms of resin solid content prepared by filtration through a microfilter

### Synthesis example 1 (Synthesis of acrylic acrylate A1)

In a reaction apparatus equipped with a stirrer, a condenser, a dropping funnel, and a nitrogen inlet tube, 500 parts by mass of methyl isobutyl ketone was placed and heated under stirring until the system temperature reached 110°C. Subsequently, a mixture of 250 parts by mass of glycidyl methacrylate, 80 parts by mass of methyl methacrylate, 40 parts by mass of ethyl acrylate, and 5.5 parts by mass of t-butyl peroxy-2-ethylhexanoate ("PERBUTYL O" manufactured by Nippon Nyukazai Co., Ltd.) was added dropwise over 2 hours from the dropping funnel and the resultant solution was held at 110°C for 15 hours. The solution was then allowed to cool to 90°C. Subsequently, 5 parts by mass of methoquinone and 130 parts by mass of acrylic acid were added and 2.6 parts by mass of triphenylphosphine was then added. The resultant solution was heated to 100°C and held for 8 hours to provide 997 parts by mass of a methyl isobutyl ketone solution of acrylic acrylate A1. The acrylic acrylate 1 had the following properties. Nonvolatile content: 50.7% by mass; Gardner viscosity (25°C): Z4-Z5; Gardner color: 1 or less; Acid value: 1.5; Weight-average molecular weight (Mw) measured by GPC in terms of styrene: 24,000; Theoretical acrylic equivalent in terms of solid content: 180 g/eq

### Synthesis example 2 (Synthesis of acrylic acrylate A2)

In a reaction apparatus equipped with a stirrer, a condenser, a dropping funnel, and a nitrogen inlet tube, 500 parts by mass of methyl isobutyl ketone was placed and heated under stirring until the system temperature reached 110°C. Subsequently, a mixture of 180 parts by mass of glycidyl methacrylate, 230 parts by mass of methyl methacrylate, 10 parts by mass of n-butyl methacrylate, and 17.2 parts by mass of t-butyl peroxy-2-ethylhexanoate ("PERBUTYL O" manufactured by Nippon Nyukazai Co., Ltd.) was added dropwise over 2 hours from the dropping funnel and the resultant solution was held at 110°C for 15 hours. The solution was then allowed to cool to 90°C. Subsequently, 5 parts by mass of methoquinone and 80 parts by mass of acrylic acid were added and 2.6 parts by mass of triphenylphosphine was then added. The resultant solution was heated to 100°C and held for 8 hours to provide 997 parts by mass of a methyl isobutyl ketone solution of acrylic acrylate 2. The acrylic acrylate A2 had the following properties. Nonvolatile content: 50.7% by mass; Gardner viscosity (25°C): U; Gardner color: 1 or less; Acid value: 1.0; Weight-average molecular weight (Mw) measured by GPC in terms of styrene: 7,400; Theoretical acrylic equivalent in terms of solid content: 400 g/eq

### EXAMPLE 1

The methyl isobutyl solution (60 parts by mass; this 60 parts by mass contained 30.42 parts by mass of the acrylic acrylate A1) of the acrylic acrylate A1 obtained in Synthesis example 1 above, 30 parts by mass of dipentaerythritol hexaacrylate (hereafter abbreviated as "DPHA"), 40 parts by mass of AEROSIL R711 ("AEROSIL R711" manufactured by NIPPON AEROSIL CO., LTD., silica fine particles having an average primary particle size of 12 nm), and 70 parts by mass of MIBK were mixed to provide a slurry. The slurry contained 49.8 parts by mass of MIBK with respect to 100 parts by mass.

The slurry (300 g) was dispersed with the wet ball mill Z [internal volume: 0.17 L, medium: zirconia beads having a median size of 100 µm (80% by volume of the internal volume of the wet ball mill was filled)] illustrated in Fig. 4, and was mixed and dispersed with the circulation-type dispersion cycle illustrated in Fig. 6.

In Fig. 6, the slurry was first charged into the stock tank 31. The motor 33 was operated to rotate the rotational shaft (q2) and the stirring impeller (r2). The power of the motor 33 was adjusted such that the peripheral speed of the tip portions of the stirring impeller (r2) was 10 m/sec. The slurry was then supplied through the slurry supply port (s2) in Fig. 4 with the pump 32 such that the slurry flow rate was 200 ml/min. Circulation and pulverization were performed in accordance with the circulation cycle illustrated in Fig. 6 for 45 minutes to provide a dispersion.

The resultant dispersion (100 g) and 2 g of a photoinitiator ("IRGACURE#184" manufactured by Ciba Specialty Chemicals) were mixed to provide a coating material. Properties of the coating material were evaluated by various tests described below and the results are described in Table 1.

### Pencil hardness test for coating film

### 1. Method for preparing cured coating film

The coating material was applied (film thickness: 10 µm) to a triacetyl cellulose (TAC) film (film thickness: 40 um) with a bar coater, dried at 70°C for 1 minute, and cured by being passed by a high-pressure mercury-vapor lamp at an irradiation dose of 250 mJ/cm² in nitrogen. Thus, a test piece having a cured coating film was prepared.

### 2. Pencil hardness test method

The cured coating film of the test piece was evaluated by the pencil scratch test under a load of 500 g in compliance with JIS K 5400.

### Transparency test for coating film

### 1. Method for preparing cured coating film

A coating film was prepared in the same manner as in the pencil hardness test.

### 2. Transparency test method

The haze value of the coating film was measured with a "Haze computer HZ-2" manufactured by Suga Test Instruments Co., Ltd. The lower the haze value, the higher the transparency of the coating film is.

### Storage stability test for coating material

The coating material was stored under three temperature conditions of 40°C, 20°C, and -20°C for 14 days and tested in terms of storage stability under the temperature conditions.
Good: No agglomerate observed
Poor: Agglomerate observed

### EXAMPLES 2 to 14

Coating materials were prepared as in EXAMPLE 1 except that slurries had compositions described in Tables 1-1 and 1-2. These coating materials were tested as in EXAMPLE 1. The results are described in Tables 1-1 and 1-2.

### EXAMPLE 15

The slurry (450 kg) having the composition described in Table 1-2 was mixed and dispersed with the wet ball mill Y (internal volume: 10 L) illustrated in Fig. 1 and with the circulation-type dispersion cycle illustrated in Fig. 3.

A pre-dispersion step was first performed. Zirconia beads having a median size of 500 µm were used as the medium to fill 80% by volume of the internal volume of the wet ball mill. In Fig. 3, the slurry was charged into the stock tank 12. The motor 14 was operated to rotate the rotational shaft (q1) and the stirring impeller (r1). The power of the motor 14 was adjusted such that the peripheral speed of the tip portions of the stirring impeller (r1) was 13 m/sec. The slurry was then supplied through the slurry supply port (s1) in Fig. 1 with the pump 13 such that the slurry flow rate was 10 L/min. Circulation and pulverization were performed with the circulation cycle illustrated in Fig. 3 for 150 minutes. After the dispersion was completed, the slurry was entirely taken out into the product tank 15. A dispersion step was then performed. Zirconia beads having a median size of 100 µm were used as the medium to fill 80% by volume of the internal volume of the wet ball mill. The slurry was transferred from the product tank 15 to the stock tank 14. The motor 14 was operated to rotate the rotational shaft (q1) and the stirring impeller (r1). The power of the motor 14 was adjusted such that the peripheral speed of the tip portions of the stirring impeller (r1) was 13 m/sec. The slurry was then supplied through the slurry supply port (s1) in Fig. 1 with the pump 13 such that the slurry flow rate was 5 L/min. Circulation and pulverization were performed with the circulation cycle illustrated in Fig. 3 for 10 hours to provide a dispersion.

The dispersion was used to prepare a coating material as in EXAMPLE 1 and tests were performed as in EXAMPLE 1. The results are described in Table 1-2.

### EXAMPLE 16

A coating material was prepared as in EXAMPLE 15 except that the slurry had the composition described in Table 1-2 and tests were performed as in EXAMPLE 1. The results are described in Table 1-2.

[Table 1]

**Table 1-1**

| | | Example 1 | Example 2 | Example 3 | example 4 | Example 5 | Example 6 | Example 7 | Example 8 |
|---|---|---|---|---|---|---|---|---|---|
| Compound A | MIBK solution of acrylic acrylate A1 (parts by mass) | 60 | 60 | 60 | 60 | 60 | 60 | 60 | 60 |
| | MIBK solution of acrylic acrylate A2 (parts by mass) | | | | | | | | |
| Compound B | dipentaerythritol hexaacrylate (parts by mass) | 30 | | | 30 | 30 | 30 | 30 | 30 |
| | pentaerythritol tetraacrylate (parts by mass) | | 30 | | | | | | |
| | trimethylolpropane triacrylate (parts bv mass) | | | 30 | | | | | |
| Inorganic fine particles C | AEROSIL R711 (parts bv mass) | 40 | 40 | 40 | | | | | |
| | AEROSIL 50 (parts by mass) | | | | 40 | | | | |
| | AEROSIL 200 (parts by mass) | | | | | 40 | | | |
| | AEROSIL 300 (parts by mass) | | | | | | 40 | | |
| | AEROSIL R7200 (parts by mass) | | | | | | | 40 | |
| | AEROSIL NAX50 (parts by mass) | | | | | | | | 40 |
| | AEROSIL R8200 (parts by mass) | | | | | | | | |
| | UEP100 (parts by mass) | | | | | | | | |
| | SPZ100 (parts by mass) | | | | | | | | |
| | T-1 (parts by mass) | | | | | | | | |
| | Al₂O₃ (parts by mass) | | | | | | | | |
| Organic solvent S | MIBK (parts by mass) | 70 | 70 | 70 | 70 | 70 | 70 | 70 | 70 |
| | MIBK in slurry (mass%) | 49.8 | 49.8 | 49.8 | 49.8 | 49.8 | 49.8 | 49.8 | 49.8 |
| | Dispersion apparatus used | mill Z | mill Z | mill Z | mill Z | mill Z | mill Z | mill Z | mill Z |
| Coating film tests | Pencil hardness | 2H | 2H | 2H | H | H | H | 3H | H |
| | Transparency | 0.15 | 0.15 | 0.15 | 0.4 | 0.1 | 0.05 | 0.15 | 0.4 |
| Storage stability | 40°C | Good | Good | Good | Good | Good | Good | Good | Good |
| | 20°C | Good | Good | Good | Good | Good | Good | Good | Good |
| | -20°C | Good | Good | Good | Good | Good | Good | Good | Good |

[Table 2]

**Table 1-2**

| | | Example 9 | Example 10 | Example 11 | Example 12 | Example 13 | Example 14 | Example 15 | Example 16 |
|---|---|---|---|---|---|---|---|---|---|
| Compound A | MIBK solution of acrylic acrylate A1 (parts by mass) | 60 | 60 | 60 | 60 | 60 | | 60 | 60 |
| | MIBK solution of acrylic acrylate A2 (parts by mass) | | | | | | 60 | | |
| Compound B | dipentaerythritol hexaacrylate (parts by mass) | 30 | 30 | 30 | 30 | 30 | 30 | 30 | 30 |
| | pentaerythritol tetraacrylate (parts by mass) | | | | | | | | |
| | trimethylolpropane triacrylate (parts by mass) | | | | | | | | |
| Inorganic tine particles C | AEROSIL R711 (parts by mass) | | | | | | 40 | 40 | |
| | AEROSIL 50 (parts by mass) | | | | | | | | |
| | AEROSIL 200 (parts by mass) | | | | | | | | |
| | AEROSIL 300 (parts by mass) | | | | | | | | |
| | AEROSIL R7200 (parts by mass) | | | | | | | | 40 |
| | AEROSIL NAX50 (parts bv mass) | | | | | | | | |
| | AEROSIL R8200 (parts by mass) | 40 | | | | | | | |
| | UEP100 (parts by mass) | | 40 | | | | | | |
| | SPZ100 (parts by mass) | | | 40 | | | | | |
| | T-1 (parts by mass) | | | | 40 | | | | |
| | Al₂O₃ (parts by mass) | | | | | 40 | | | |
| Organic solvent S | MIBK (parts by mass) | 70 | 70 | 70 | 70 | 70 | 70 | 70 | 70 |
| | MIBK in slurry (mass%) | 49.8 | 49.8 | 49.8 | 49.8 | 49.8 | 49.8 | 49.8 | 49.8 |
| Dispersion apparatus used | UAM500 | mill Z | mill Z | mill Z | mill Z | mill Z | mill Z | mill Y | mill Y |
| Coating film tests | Pencil hardness | 2H | 3H | 3H | H | 2H | 2H | 2H | 3H |
| | Transparency | 0.3 | 0.8 | 0.8 | 1.2 | 0.3 | 0.1 | 0.15 | 0.15 |
| Storage stability | 40°C | Good | Good | Good | Good | Good | Good | Good | Good |
| | 20°C | Good | Good | Good | Good | Good | Good | Good | Good |
| | -20°C | Good | Good | Good | Good | Good | Good | Good | Good |

Footnote of Tables 1-1 and 1-2
AEROSIL R711: "AEROSIL 711" manufactured by NIPPON AEROSIL CO., LTD., silica fine particles having an average primary particle size of 12 nm
AEROSIL 50: "AEROSIL 50" manufactured by NIPPON AEROSIL CO., LTD., silica fine particles having an average primary particle size of 30 nm
AEROSIL 200: "AEROSIL 200" manufactured by NIPPON AEROSIL CO., LTD., silica fine particles having an average primary particle size of 12 nm
AEROSIL 300: "AEROSIL 300" manufactured by NIPPON AEROSIL CO., LTD., silica fine particles having an average primary particle size of 7 nm
AEROSIL R7200: "AEROSIL 7200" manufactured by NIPPON AEROSIL CO., LTD., silica fine particles having an average primary particle size of 12 nm
AEROSIL NAX50: "AEROSIL NAX50" manufactured by NIPPON AEROSIL CO., LTD., silica fine particles having an average primary particle size of 30 nm
AEROSIL R8200: "AEROSIL 8200" manufactured by NIPPON AEROSIL CO., LTD., silica fine particles having an average primary particle size of 12 nm
UEP100: "UEP100" manufactured by Daiichi Kigenso Kagaku Kogyo Co., Ltd., zirconia fine particles having an average primary particle size of 6 nm
SPZ100: "SPZ100" manufactured by Daiichi Kigenso Kagaku Kogyo Co., Ltd., zirconia fine particles having an average primary particle size of 20 nm
T-1: "T-1" manufactured by Mitsubishi Materials Electronic Chemicals Co., Ltd., tin-antimony-based oxide fine particles having a primary particle size of 20 nm
Al₂O₃: "NanoTek Al₂O₃" manufactured by CIK NanoTek Corporation, alumina fine particles having an average primary particle size of 30 nm

### COMPARATIVE EXAMPLE 1

The methyl isobutyl ketone solution (60 parts by mass; this 60 parts by mass contained 30.42 parts by mass of the acrylic acrylate A1)of the acrylic acrylate A1 obtained in Synthesis example 1 above, 40 parts by mass of UEP100 ("UEP100" manufactured by Daiichi Kigenso Kagaku Kogyo Co., Ltd., zirconia fine particles having an average primary particle size of 6 nm), and 70 parts by mass of MIBK were mixed to provide a slurry. The slurry contained 58.6 parts by mass of MIBK with respect to 100 parts by mass.

The slurry (300 g) was dispersed as in EXAMPLE 1 to provide a dispersion.

The dispersion (170 parts by mass), 30 parts by mass of dipentaerythritol hexaacrylate, and 4 parts by mass of a photoinitiator ("IRGACURE#184" manufactured by Ciba Specialty Chemicals) were mixed to provide a coating material. The coating material was tested as in EXAMPLE 1 and the results are described in Table 2.

### COMPARATIVE EXAMPLE 2

The methyl isobutyl ketone solution (60 parts by mass; this 60 parts by mass contained 30.42 parts by mass of the acrylic acrylate A1) of the acrylic acrylate A1 obtained in Synthesis example 1 above, 30 parts by mass of dipentaerythritol hexaacrylate, 40 parts by mass of MEK-ST ("MEK-ST" manufactured by Nissan Chemical Industries, Ltd., colloidal silica), 70 parts by mass of MIBK, and 4 parts by mass of a photoinitiator ("IRGACURE#184" manufactured by Ciba Specialty Chemicals) were mixed to provide a coating material. The coating material was tested as in EXAMPLE 1 and the results are described in Table 2.

### COMPARATIVE EXAMPLE 3

The methyl isobutyl ketone solution (60 parts by mass; this 60 parts by mass contained 30.42 parts by mass of the acrylic acrylate A1) of the acrylic acrylate A1 obtained in Synthesis example 1 above, 40 parts by mass of AEROSIL R711 ("AEROSIL R711" manufactured by NIPPON AEROSIL CO., LTD., silica fine particles having an average primary particle size of 12 nm), and 70 parts by mass of MIBK were mixed to provide a slurry. The slurry contained 49.8 parts by mass of MIBK with respect to 100 parts by mass.

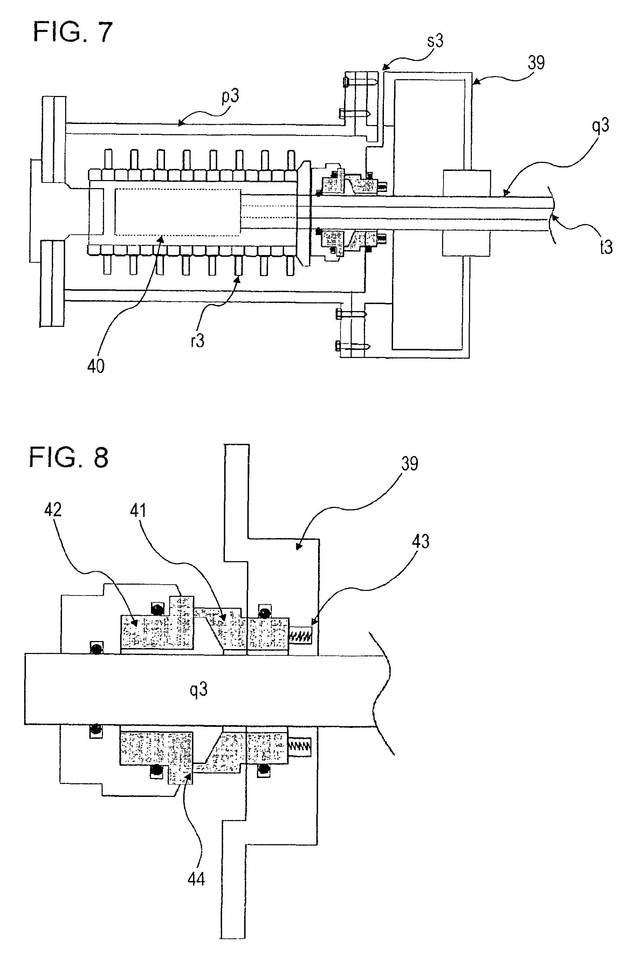

The slurry (450 kg) was prepared and dispersed with a wet ball mill X [internal volume: 10 L] illustrated in Figs. 7 and 8. The wet ball mill X is equipped with a rotational-screen-type separator 40 illustrated in Fig. 7 and a single-type mechanical seal (u3) having a structure illustrated in Fig. 8. In the mechanical seal (u3), the raw-material slurry charged into a vessel (p3) flows into the gap between a rotational ring 41 and a fixed ring 42. The dispersion step was performed with the circulation-type cycle illustrated in Figs. 3 and 6. Zirconia beads having a median size of 100 µm were used as the medium to fill 80% by volume of the internal volume of the wet ball mill. The slurry was then charged into the stock tank. The motor was operated to rotate a rotational shaft (q3), a stirring impeller (r3), and the rotational-screen-type separator 40. The power of the motor was adjusted such that the peripheral speed of the tip portions of the stirring impeller was 13 m/sec. The slurry was then supplied through a slurry supply port (s3) in Fig. 7 with the pump such that the slurry flow rate was 5 L/min; and circulation and pulverization were performed. As a result, gelation was caused in the mill and a dispersion was not provided.

### COMPARATIVE EXAMPLES 4 and 5

Slurries having the compositions described in Table 2 were prepared and dispersed as in COMPARATIVE EXAMPLE 3. As a result, gelation was caused in the mill and dispersions were not provided.

[Table 3]

**Table 2**

| | | Comparative Example 1 | Comparative Example 2 | Comparative Example 3 | Comparative Example 4 | Comparative Example 5 |
|---|---|---|---|---|---|---|
| Compound A | MIBK solution of acrylic acrylate A1 (parts by mass) | 60 | 60 | 60 | 60 | 60 |
| | MIBK solution of acrylic acrylate A2 (parts by mass) | | | | | |
| Compound B | dipentaerythritol hexaacrylate (parts by mass) | 30(*) | 30 | 30 | | |
| | pentaerythritol tetraacrylate (parts by mass) | | | | 30 | |
| | trimethylolpropane triacrylate (parts by mass) | | | | | 30 |
| Inorganic fine particles C | AEROSIL R711 (parts by mass) | | | 40 | 40 | 40 |
| | UEP100 (parts by mass) | 40 | | | | |
| | MEK-ST (parts bv mass) | | 40 | | | |
| Organic solvent S | MIBK (parts by mass) | 70 | 70 | 70 | 70 | 70 |
| | MIBK in slurry (mass%) | 49.8 | - | 49.8 | 49.8 | 49.8 |
| | Dispersion apparatus used | mill Z | - | mill X | mill X | mill X |
| Coating film tests | Pencil hardness | 2H | H | Gelation | Gelation | Gelation |
| | Transparency | 0.8 | 0.5 | | | |
| Storage stability | 40°C | Poor | Poor | | | |
| | 20°C | Poor | Good | | | |
| | -20°C | Good | Good | | | |

| | | | | | | |
|---|---|---|---|---|---|---|
| Footnote of Table 2 *) In COMPARATIVE EXAMPLE 1, the compound (B) was later added to a dispersion composed of the compound (A), the inorganic fine particles (C), and the organic solvent (S). Reference Signs List | | | | | | |

- p1: vessel
- q1: shaft
- r1: stirring impeller
- s1: slurry supply port
- t1: slurry discharge port
- u1: shaft seal device
- 1: housing of shaft seal device
- 2: screen-type separator
- 3: rotational ring
- 4: fixed ring
- 5: external-sealing-liquid supply port
- 6: external-sealing-liquid discharge port
- 7: vessel external-sealing-liquid tank
- 8: pump
- 9: gap formed between the rotational ring 3 and the fixed ring 4
- 10: spring
- 11: liquid seal space
- Y: wet ball mill
- 12: stock tank
- 13: pump
- 14: motor
- 15: product tank
- 16: valve
- 17: valve
- 18: valve serving as inlet for compressed air or nitrogen
- 19: valve
- p2: vessel
- q2: shaft
- r2: stirring impeller
- s2: slurry supply port
- t2: slurry discharge port
- u2: shaft seal device
- 20: impeller-type separator
- 21: housing of shaft seal device
- 22: rotational ring
- 23: fixed ring
- 24: liquid seal space
- 25: external-sealing-liquid supply port
- 26: external-sealing-liquid discharge port
- 27: external-sealing-liquid tank
- 28: pump
- 29: gap formed between the rotational ring 22 and the fixed ring 23
- 30: spring
- 31: stock tank
- 32: pump
- 33: motor
- 34: product tank
- 35: valve
- 36: valve
- 37: valve serving as inlet for compressed air or nitrogen
- 38: valve
- p3: vessel
- q3: shaft
- r3: stirring impeller
- s3: slurry supply port
- t3: slurry discharge port
- u3: shaft seal device
- 39: housing of shaft seal device
- 40: rotational-screen-type separator
- 41: rotational ring
- 42: fixed ring
- 43: spring
- 44: gap formed between the rotational ring 41 and the fixed ring 42

## Claims

1. A method for producing a dispersion, comprising,
in a wet ball mill including
a vessel (p) filled with a medium,
a rotational shaft (q),
a stirring impeller (r) that has a rotational axis coaxial with the rotational shaft (q) and that is rotated by rotation of the rotational shaft,
a slurry supply port (s) provided in the vessel (p),
a slurry discharge port (t) provided in the vessel (p), and
a shaft seal device (u) disposed in a portion where the rotational shaft penetrates the vessel, the shaft seal device (u) including two mechanical seal units in which seal portions of the two mechanical seal units are sealed with an external sealing liquid,
supplying a slurry through the supply port (s) into the vessel (p), the slurry containing as essential components an active-energy-ray-curable compound (A), an active-energy-ray-curable compound (B), and inorganic fine particles (C), the active-energy-ray-curable compound (A) having a weight-average molecular weight (Mw) in a range of 3,000 to 100,000, having a (meth)acryloyl group in a molecular structure, and having a (meth)acryloyl equivalent in a range of 100 g/eq to 600 g/eq, the active-energy-ray-curable compound (B) having 3 to 6 (meth)acryloyl groups in a molecular structure and having a molecular weight in a range of 100 to 600; rotating the rotational shaft (q) and the stirring impeller (r) in the vessel (p) to stir the medium and the slurry so that the inorganic fine particles (C) in the slurry are pulverized and the inorganic fine particles (C) are dispersed in the active-energy-ray-curable compound (A) and the active-energy-ray-curable compound (B); and subsequently discharging the slurry through the discharge port.

2. The method for producing a dispersion according to Claim 1, wherein, the shaft seal device (u) disposed in the wet ball mill includes the two mechanical seal units each of which has a structure where a rotational ring secured to the rotational shaft (q) and a fixed ring secured to a housing of the shaft seal device (u) are disposed as a pair to form the seal portion; the shaft seal device (u) includes a liquid seal space provided between the two mechanical seal units, and an external-sealing-liquid supply port and an external-sealing-liquid discharge port that are in communication with the liquid seal space; and, in a state where the liquid seal space is filled in fluid-tight manner with an external sealing liquid (R) supplied through the external-sealing-liquid supply port and a gap formed, in the seal portion, between the rotational ring and the fixed ring is sealed so as to be filled with the external sealing liquid (R), the pulverization of the inorganic fine particles (C) in the slurry and the dispersion of the inorganic fine particles (C) in the active-energy-ray-curable compound (A) and the active-energy-ray-curable compound (B) are performed.

3. The method for producing a dispersion according to Claim 1, wherein the active-energy-ray-curable compound (A) has a hydroxyl group in the molecular structure and a hydroxyl value in a range of 90 to 280 mgKOH/g.

4. The method for producing a dispersion according to Claim 1, wherein the active-energy-ray-curable compound (A) is an acrylic-polymer poly(meth)acrylate (E).

5. The method for producing a dispersion according to Claim 1, wherein the inorganic fine particles (C) are inorganic fine particles of one or more types selected from the group consisting of silica particles, alumina particles, zirconia particles, titania particles, barium titanate particles, and antimony trioxide particles.

6. The method for producing a dispersion according to Claim 1, wherein the inorganic fine particles (C) have an average primary particle size in a range of 5 to 300 nm in terms of median size.

7. The method for producing a dispersion according to Claim 5, wherein the inorganic fine particles (C) are silica particles.

8. The method for producing a dispersion according to Claim 1, wherein the medium has an average particle size in a range of 10 to 1,000 µm in terms of median size.

9. The method for producing a dispersion according to Claim 1, wherein the medium is zirconia fine particles.

10. The method for producing a dispersion according to Claim 1, the method being performed under a temperature condition of 0°C to 50°C.

11. The method for producing a dispersion according to Claim 1, wherein a peripheral speed of a tip portion of the stirring impeller (r) is in a range of 5 to 20 m/sec.

12. The method for producing a dispersion according to Claim 1, wherein a flow rate of the slurry during the supply of the slurry through the supply port into the vessel is in a range of 1 to 100 L/h with respect to 1 liter of a volume of the vessel.

13. The method for producing a dispersion according to Claim 1, wherein two dispersion steps are performed that are a pre-dispersion step employing, as the medium, zirconia fine particles having a median size in a range of 400 to 1,000 µm and a dispersion step employing, as the medium, zirconia fine particles having a median size in a range of 15 to 400 µm.

14. The method for producing a dispersion according to Claim 1, wherein the wet ball mill further includes a circulation path connecting the supply port and the discharge port and the dispersion step is continuously performed.

15. A dispersion produced by the method for producing a dispersion according to any one of Claims 1 to 14.

16. A coating material comprising the dispersion according to Claim 15 and a photopolymerization initiator (P).

17. A coating film formed of the coating material according to Claim 16.

18. A film formed by coating a single surface or both surfaces of a plastic film with the coating film according to Claim 17 and irradiating the coating film with an active energy ray.

19. The film according to Claim 18, wherein the plastic film is a triacetyl cellulose (TAC) film.

## Patentansprüche

1. Verfahren zur Herstellung einer Dispersion, umfassend: In einer Nasskugelmühle, umfassend
ein mit einem Medium gefülltes Gefäß (p),
eine Rotationswelle (q),
einen Rührimpeller (r), der eine Rotationsachse aufweist, die koaxial mit der Rotationswelle (q) ist, und durch Rotation der Rotationswelle gedreht wird,
einen Aufschlämmungseinlassstutzen, der an dem Gefäß (p) vorhanden ist,
einen Aufschlämmungsauslassstutzen (t), der in dem Gefäß (p) vorhanden ist, und
eine Vorrichtung zum Abdichten der Welle (u), die in einem Bereich angeordnet ist, in welchem die Rotationswelle das Gefäß durchdringt, wobei die Vorrichtung zur Abdichtung der Welle (u) zwei mechanische Dichtungseinheiten umfasst, in welchen Dichtungsbereiche der beiden mechanischen Dichtungseinheiten mit einer externen Dichtungsflüssigkeit abgedichtet sind,
Zufuhr einer Aufschlämmung durch den Einlassstutzen (s) in das Gefäß (p), wobei die Aufschlämmung als wesentliche Komponenten eine mit aktiver Energiestrahlung härtbare Verbindung (A), eine mit einer aktiver Energiestrahlung härtbare Verbindung (B), und anorganische Feinpartikel (C) enthält, wobei die mit aktiver Energiestrahlung härtbare Verbindung (A) ein gewichtsmittleres Molekulargewicht (Mw) in einem Bereich von 3.000 bis 100.000 aufweist, eine (Meth)acryloylgruppe in der Molekularstruktur aufweist, und ein Meth(acryloyläquivalent) in einem Bereich von 100 g/äq bis 600 g/äq aufweist, und die mit aktiver Energiestrahlung härtbare Verbindung (B) mit 3 bis 6 (Meth)acryloylgruppen in der Molekularstruktur ein Molekulargewicht in einem Bereich von 100 bis 600 aufweist; Drehen der Rotationswelle (q) und des Rührimpellers (r) in dem Gefäß (p) unter Rühren des Mediums und der Aufschlämmung, sodass die anorganischen Feinpartikel (C) in der Aufschlämmung pulverisiert werden und die anorganischen Feinpartikel (C) in der mit aktiver Energiestrahlung härtbaren Verbindung (A) und der mit aktiver Energiestrahlung härtbaren Verbindung (B) dispergiert werden; und anschließend Entladen der Aufschlämmung durch den Auslassstutzen.

2. Verfahren zur Herstellung einer Dispersion gemäß Anspruch 1, wobei die Vorrichtung zur Abdichtung der Welle (u), die in der Nasskugelmühle angeordnet ist, zwei mechanische Dichtungseinheiten umfasst, wobei jede eine Struktur aufweist, in welcher ein Rotationsring, der an der Rotationswelle (q) verankert ist, und ein befestigter Ring, der an einem Gehäuse der Vorrichtung zur Abdichtung der Welle (u) verankert ist, als Paar unter Bildung des Dichtungsbereichs angeordnet sind; die Vorrichtung zur Abdichtung der Welle (u) einen Flüssigkeits-Dichtungsraum, der zwischen den beiden mechanischen Dichtungseinheiten vorgesehen ist, und einen Einlassstutzen für eine externe Dichtungsflüssigkeit und einen Auslassstutzen für eine externe Dichtungsflüssigkeit, die mit dem Flüssigkeits-Dichtungsraum in Verbindung stehen, aufweist; und in einem Zustand, in welchem der Flüssigkeits-Dichtungsraum in einer flüssigkeitsdichten Weise mit einer externen Dichtungsflüssigkeit (R), die durch den Einlassstutzen für die externe Dichtungsflüssigkeit zugespeist, und ein Hohlraum gebildet wird, in dem Dichtebereich zwischen dem Rotationsring und dem vierten Ring verschlossen wird, sodass mit der externen Dichtungsflüssigkeit (R) die Pulverisierung der anorganischen Feinpartikel (C) in der Aufschlämmung und die Dispersion der anorganischen Feinteilchen (C) in der durch aktive Energiestrahlung härtbaren Verbindung (A) und der durch aktive Energiestrahlung härtbare Verbindung (B) ausgeführt werden.

3. Verfahren zur Herstellung einer Dispersion gemäß Anspruch 1, wobei die durch aktive Energiestrahlung härtbare Verbindung (A) eine Hydroxylgruppe in der molekularen Struktur und eine Hydroxylzahl im Bereich von 90 bis 280 mgKOH/g aufweist.

4. Verfahren zur Herstellung einer Dispersion gemäß Anspruch 1, wobei die durch aktive Energiestrahlung härtbare Verbindung (A) einer Acrylpolymer-poly(meth)acrylat (E) ist.

5. Verfahren zur Herstellung einer Dispersion gemäß Anspruch 1, wobei die anorganischen Feinpartikel (C) anorganische Feinpartikel von einem oder mehreren Typ(en) sind, ausgewählt aus der Gruppe, bestehend aus Siliciumdioxidpartikeln, Aluminiumoxidpartikeln, Zirkoniumdioxidpartikeln, Titaniumdioxidpartikeln, Bariumtitanatpartikeln und Antimontrioxidpartikeln.

6. Verfahren zur Herstellung einer Dispersion gemäß Anspruch 1, wobei die anorganischen Feinpartikel (C) eine durchschnittliche Primärpartikelgröße in einem Bereich von 5 bis 300 nm bezüglich der mittleren Größe aufweisen.

7. Verfahren zur Herstellung einer Dispersion gemäß Anspruch 5, wobei die anorganischen Feinpartikel (C) Siliciumdioxidpartikel sind.

8. Verfahren zur Herstellung einer Dispersion gemäß Anspruch 1, wobei das Medium eine durchschnittliche Partikelgröße in einem Bereich von 10 bis 1.000 µm bezüglich der mittleren Größe aufweist.

9. Verfahren zur Herstellung einer Dispersion gemäß Anspruch 1, wobei das Medium aus Zirkoniumdioxidfeinpartikeln besteht.

10. Verfahren zur Herstellung einer Dispersion gemäß Anspruch 1, wobei das Verfahren unter einer Temperaturbedingung von 0°C bis 50°C ausgeführt wird.

11. Verfahren zur Herstellung einer Dispersion gemäß Anspruch 1, wobei die Umlaufgeschwindigkeit des spitzen Bereichs des Rührimpellers (r) in einem Bereich von 5 bis 20 m/s liegt.

12. Verfahren zur Herstellung einer Dispersion gemäß Anspruch 1, wobei die Flussrate der Aufschlämmung während der Zuspeisung der Aufschlämmung durch den Zufuhrstutzen in das Gefäß in einem Bereich von 1 bis 100 L/h bezüglich 1 Liter Volumen des Gefäßes erfolgt.

13. Verfahren zur Herstellung einer Dispersion gemäß Anspruch 1, wobei zwei Dispersionsschritte ausgeführt werden, die ein Dispersionsschritt, der als Medium Zirkoniumdioxidfeinpartikel mit einer mittleren Größe in einem Bereich von 400 bis 1.000 µm verwendet, und ein Dispersionsschritt, der als Medium Zirkoniumdioxidfeinpartikel mit einer mittleren Größe in einem Bereich von 15 bis 400 µm verwendet, sind.

14. Verfahren zur Herstellung einer Dispersion gemäß Anspruch 1, wobei die Nasskugelmühle des Weiteren einen Umlaufpfad umfasst, der den Zufuhrstutzen und den Auslassstutzen verbindet, und der Dispersionsschritt wird kontinuierlich ausgeführt.

15. Dispersion, hergestellt durch das Verfahren zur Herstellung einer Dispersion gemäß einem der Ansprüche 1 bis 14.

16. Beschichtungsmaterial, umfassend die Dispersion gemäß Anspruch 15 und einem Photopolymerisationsinitiator (P).

17. Überzugsfilm, gebildet aus dem Beschichtungsmaterial gemäß Anspruch 16.

18. Film, hergestellt durch Beschichten einer einzelnen Oberfläche oder beider Oberflächen eines Kunststofffilms mit dem Beschichtungsfilm gemäß Anspruch 17, und Bestrahlen des Beschichtungsfilms mit aktiver Energiestrahlung.

19. Film gemäß Anspruch 18, wobei der Kunststofffilm ein Triacetylcellulose-(TAC)-Film ist.

## Revendications

1. Procédé de production d'une dispersion, comprenant, dans un broyeur à bille à l'état humide comprenant
un récipient (p) rempli d'un milieu,
un arbre de rotation (q),
une hélice d'agitation (r) qui a un axe de rotation coaxial avec l'arbre de rotation (q) et qui est mis en rotation par rotation de l'arbre de rotation,
une ouverture d'alimentation d'une suspension (s) fournie dans le récipient (p),
une ouverture de décharge de suspension (t) fournie dans le récipient (p), et
un dispositif d'étanchéité d'arbre (u) placé dans une portion dans laquelle l'arbre de rotation pénètre dans le récipient, le dispositif d'étanchéité d'arbre (u) comprenant deux unités d'étanchéité mécaniques dans lesquelles des portions d'étanchéité des deux unités d'étanchéité mécaniques sont scellées par un liquide d'étanchéité externe,
la fourniture d'une suspension par l'ouverture d'alimentation (s) dans le récipient (p), la suspension contenant en tant que composants essentiels un composé durcissable par un rayon d'énergie active (A), un composé durcissable par un rayon d'énergie active (B) et de particules fines inorganiques (C), le composé durcissable par un rayon d'énergie active (A) ayant une masse moléculaire moyenne en poids (Mp) dans une plage de 3 000 à 100 000, ayant un groupe (méth)acryloyle dans une structure moléculaire et ayant un équivalent de (méth)acryloyle dans une plage de 100 g/eq à 600 g/eq, le composé durcissable par un rayon d'énergie active (B) ayant 3 à 6 groupes (méth)acryloyle dans une structure moléculaire et ayant une masse moléculaire dans une plage de 100 à 600 ; la rotation de l'arbre de rotation (q) et de l'hélice d'agitation (r) dans le récipient (p) pour remuer le milieu et la suspension, de sorte que les particules fines inorganiques (C) dans la suspension soient pulvérisées et que les particules fines inorganiques (C) soient dispersées dans le composé durcissable par un rayon d'énergie active (A) et dans le composé durcissable par un rayon d'énergie active (B) ; et par la suite la décharge de la suspension par l'ouverture de décharge.

2. Procédé de production d'une dispersion selon la revendication 1, dans lequel le dispositif d'étanchéité d'arbre (u) placé dans le broyeur à bille à l'état humide comprend deux unités d'étanchéité mécaniques qui ont chacune une structure dans laquelle un anneau de rotation fixé à l'arbre de rotation (q) et un anneau fixe fixé à un logement du dispositif d'étanchéité d'arbre (u) sont placés sous forme d'une paire pour former une partie d'étanchéité ; le dispositif d'étanchéité d'arbre (u) comprend un espace d'étanchéité de liquide fourni entre les deux unités d'étanchéité mécaniques et une ouverture d'alimentation de liquide d'étanchéité externe et une ouverture de décharge de liquide d'étanchéité externe qui sont en communication avec l'espace d'étanchéité de liquide ; et, dans un état où l'espace d'étanchéité de liquide est rempli d'une manière hermétique au fluide avec un liquide d'étanchéité externe (R) fourni par l'ouverture d'alimentation de liquide d'étanchéité externe et un espace formé, dans la partie d'étanchéité, entre l'anneau de rotation et l'anneau fixe est scellé de façon à être rempli avec le liquide d'étanchéité externe (R), la pulvérisation des particules fines inorganiques (C) dans la suspension et la dispersion des particules fines inorganiques dans le composé durcissable par un rayon d'énergie active (A) et dans le composé durcissable par un rayon d'énergie active (B) sont réalisés.

3. Procédé de production d'une dispersion selon la revendication 1, dans lequel le composé durcissable par un rayon d'énergie active (A) a un groupe hydroxyle dans la structure moléculaire et un indice d'hydroxyle dans une plage de 90 à 280 mg de KOH/g.

4. Procédé de production d'une dispersion selon la revendication 1, dans lequel le composé durcissable par un rayon d'énergie active (A) est un polymère acrylique le poly(méth)acrylate (E).

5. Procédé de production d'une dispersion selon la revendication 1, dans lequel les particules fines inorganiques (C) sont de particules fines inorganiques d'un ou de plusieurs types choisis dans le groupe constitué des particules de silice, des particules d'alumine, des particules d'oxyde de zirconium, des particules d'oxyde de titane, des particules de titanate de baryum et des particules de trioxyde d'antimoine.

6. Procédé de production d'une dispersion selon la revendication 1, dans lequel les particules fines inorganiques (C) ont une taille moyenne de particules primaires dans une plage de 5 à 300 nm en termes de taille moyenne.

7. Procédé de production d'une dispersion selon la revendication 5, dans lequel les particules fines inorganiques (C) sont des particules de silice.

8. Procédé de production d'une dispersion selon la revendication 1, dans lequel le milieu a une taille moyenne de particules dans une plage de 10 à 1 000 µm en termes de taille moyenne.

9. Procédé de production d'une dispersion selon la revendication 1, dans lequel le milieu est constitué de particules fines d'oxyde de zirconium.

10. Procédé de production d'une dispersion selon la revendication 1, le procédé étant réalisé à une température de 0 °C à 50 °C.

11. Procédé de production d'une dispersion selon la revendication 1, dans lequel une vitesse périphérique de la partie d'extrémité de l'hélice d'agitation (r) est dans une plage de 5 à 20 m/s.

12. Procédé de production d'une dispersion selon la revendication 1, dans lequel un débit de la suspension pendant l'alimentation de la suspension par l'ouverture d'alimentation dans le récipient est dans une plage de 1 à 100 l/h, pour 1 litre de volume du récipient.

13. Procédé de production d'une dispersion selon la revendication 1, dans lequel deux étapes de dispersion sont réalisées qui sont une étape de pré-dispersion employant comme milieu des particules fines d'oxyde de zirconium ayant une taille moyenne dans une plage de 400 à 1 000 µm et une étape de dispersion employant, comme milieu, des particules fines d'oxyde de zirconium ayant une taille moyenne dans une plage de 15 à 400 µm.

14. Procédé de production d'une dispersion selon la revendication 1, dans lequel le broyeur à bille à l'état humide comprend en outre un trajet de circulation reliant l'ouverture d'alimentation et l'ouverture de décharge et l'étape de dispersion est réalisée en continu.

15. Dispersion produite par le procédé de production d'une dispersion selon l'une quelconque des revendications 1 à 14.

16. Matériau de revêtement comprenant la dispersion selon la revendication 15 et un initiateur de photopolymérisation (P).

17. Film de revêtement formé du matériau de revêtement selon la revendication 16.

18. Film formé par revêtement d'une seule surface ou des deux surfaces d'un film plastique avec le film de revêtement selon la revendication 17 et l'irradiation du film de revêtement avec un rayon d'énergie active.

19. Film selon la revendication 18, dans lequel le film plastique est un film en triacétate de cellulose (TAC).
